# EUROPEAN PATENT APPLICATION

(11) **EP 4 707 131 A2**
(43) Date of publication of application: **11.03.2026**
(21) Application number: 26150302.3
(22) Date of filing: 30.11.2023
(51) Int. Cl.: B62D 11/04

(54) **VEHICLE-TYPE DRIVING DEVICE**

(30) Priority: 05.12.2022 CN 202223248551 U; 05.12.2022 CN 202211551878; 05.12.2022 CN 202211551851; 05.12.2022 CN 202211551411; 05.12.2022 CN 202211551787; 05.12.2022 CN 202211548000
(62) Divisional of application: 23899882.7
(71) Applicant: Nanjing Chervon Industry Co., Ltd., Nanjing, Jiangsu 211106 (CN)
(72) Inventor: LI, Tonghao, Nanjing (CN); WANG, Lei, Nanjing (CN); CHEN, Xu, Nanjing (CN); DU, Jian, Nanjing (CN); DAI, Cheng, Nanjing (CN); YANG, Dezhong, Nanjing (CN); WANG, Zhen, Nanjing (CN); ZHANG, Min, Nanjing (CN)
(74) Representative: Sun, Yiming

(57) **Abstract**

Provided is a vehicle-type driving device. The vehicle-type driving device provided in the present application includes a traveling assembly including multiple traveling wheels; a steering wheel configured to control the vehicle-type driving device to steer; a traveling motor for driving the vehicle-type driving device to steer at a target angular velocity, where the ratio of the target angular velocity to the change in the steering angle of the steering wheel is defined as a steering ratio; and a control device configured to, when the traveling speed of the vehicle-type driving device is within a preset range, set the steering ratio according to a steering ratio curve function, where variables of the steering ratio curve function include the steering angle of the steering wheel and the traveling speed of the vehicle-type driving device. In this manner, the steering feel of the vehicle-type driving device at different speeds can be improved, the problem of poor operating feel for a driver driving and turning can be solved, and the operating experience of the user can be improved.

## Description

This application claims priority to Chinese Patent Application No. 202223248551.9 filed with the China National Intellectual Property Administration (CNIPA) on Dec. 5, 2022, Chinese Patent Application No. 202211551878.5 filed with the CNIPA on Dec. 5, 2022, Chinese Patent Application No. 202211551851.6 filed with the CNIPA on Dec. 5, 2022, Chinese Patent Application No. 202211551411.0 filed with the CNIPA on Dec. 5, 2022, Chinese Patent Application No. 202211551787.1 filed with the CNIPA on Dec. 5, 2022, and Chinese Patent Application No. 202211548000.6 filed with the CNIPA on Dec. 5, 2022, the disclosures of which are incorporated herein by reference in their entireties.

### TECHNICAL FIELD

The present application relates to a power device, for example, a vehicle-type driving device.

### BACKGROUND

The vehicle-type driving device in the related art is widely used in the fields of trimming lawns, vegetation, and the like. Compared with a push device, the vehicle-type driving device is more labor-saving and more efficient. When the vehicle-type driving device is controlled to turn, the vehicle-type driving device is required to be able to turn flexibly to satisfy the working requirement. A steering wheel is operated in a manner similar to a manner in which a car is driven. Therefore, the vehicle-type driving device whose traveling direction is controlled by the steering wheel is easy to use and very friendly to a novice user.

For the driving safety of the user, the vehicle-type driving device usually decelerates during turning. In the related art, the processing method in which the vehicle-type driving device decelerates during turning results in poor steering feel when the driver drives the vehicle-type driving device to turn and affects the operating experience of the user.

This part provides background information related to the present application, and the background information is not necessarily the existing art.

### SUMMARY

An object of the present application is to solve or at least alleviate part or all of the preceding problems. The present application provides a vehicle-type driving device so that the problem of poor steering feel for a driver driving and turning can be solved, and the operating experience of the user can be improved.

The present application adopts the technical solutions below.

A vehicle-type driving device includes a traveling assembly including multiple traveling wheels; a steering wheel configured to control the vehicle-type driving device to steer; a traveling motor for driving the vehicle-type driving device to steer at a target angular velocity, where the ratio of the target angular velocity to the change in the steering angle of the steering wheel is defined as a steering ratio; and a control device configured to, when the traveling speed of the vehicle-type driving device is within a preset range, set the steering ratio according to a steering ratio curve function, where variables of the steering ratio curve function include the steering angle of the steering wheel and the traveling speed of the vehicle-type driving device.

In some examples, the steering ratio curve function includes a low-speed steering ratio curve function and a high-speed steering ratio curve function, and the preset range includes a low-speed driving threshold and a high-speed driving threshold, where when the traveling speed is less than the low-speed driving threshold, a low-speed steering ratio is set according to the low-speed steering ratio curve function; and when the traveling speed is greater than the high-speed driving threshold, a high-speed steering ratio of a traveling wheel of the multiple traveling wheels is set according to the high-speed steering ratio curve function.

In some examples, the multiple traveling wheels include a left traveling wheel and a right traveling wheel, and the low-speed steering ratio curve function includes a left-wheel low-speed steering ratio curve function and a right-wheel low-speed steering ratio curve function, where when the traveling speed of the left traveling wheel is less than the low-speed driving threshold, a low-speed steering ratio of the left traveling wheel is set according to the left-wheel low-speed steering ratio curve function; and when the traveling speed of the right traveling wheel is less than the low-speed driving threshold, a low-speed steering ratio of the right traveling wheel is set according to the right-wheel low-speed steering ratio curve function.

In some examples, the multiple traveling wheels include a left traveling wheel and a right traveling wheel, and the high-speed steering ratio curve function includes a left-wheel high-speed steering ratio curve function and a right-wheel high-speed steering ratio curve function, where when the traveling speed of the left traveling wheel is greater than the high-speed driving threshold, a high-speed steering ratio of the left traveling wheel is set according to the left-wheel high-speed steering ratio curve function; and when the traveling speed of the right traveling wheel is greater than the high-speed driving threshold, a high-speed steering ratio of the right traveling wheel is set according to the right-wheel high-speed steering ratio curve function.

In some examples, the maximum traveling speed of the vehicle-type driving device is greater than or equal to 11 km/h and less than or equal to 14 km/h, and the low-speed driving threshold is 20% of the maximum traveling speed.

In some examples, the maximum traveling speed of the vehicle-type driving device is greater than or equal to 11 km/h and less than or equal to 14 km/h, and the high-speed driving threshold is 90% of the maximum traveling speed.

In some examples, when the traveling speed of the vehicle-type driving device is between the low-speed driving threshold and the high-speed driving threshold, the low-speed steering ratio in the low-speed steering ratio curve function and the high-speed steering ratio in the high-speed steering ratio curve function are determined according to the steering angle of the steering wheel, and the steering ratio curve function at the traveling speed is determined according to the low-speed steering ratio and the high-speed steering ratio.

In some examples, when the traveling speed of the vehicle-type driving device is between the low-speed driving threshold and the high-speed driving threshold, the steering ratio curve function is Ratio_Speed = Ratio_SpeedLow × (1 - ratio) + Ratio_SpeedHigh × ratio, where Ratio_SpeedLow denotes the low-speed steering ratio, Ratio_SpeedHigh denotes the high-speed steering ratio, ratio denotes a steering ratio coefficient of the steering wheel, and a value of the steering ratio coefficient of the steering wheel is greater than or equal to 0 and less than or equal to 1.

In some examples, ratio = (A_Speed - TH_L)/(TH_H - TH_L), where A_Speed denotes the traveling speed of the vehicle-type driving device, TH_L denotes the low-speed driving threshold, and TH_H denotes the high-speed driving threshold.

In some examples, the steering ratio is set according to the steering ratio curve function corresponding to when the traveling speed is between the low-speed driving threshold and the high-speed driving threshold, the target angular velocity is determined according to the steering ratio and the change in the steering angle of the steering wheel, and the traveling speed is determined according to the target angular velocity.

In some examples, the vehicle-type driving device further includes a speed setting device for setting the traveling speed of the vehicle-type driving device, where the traveling speed set by the speed setting device is defined as an input speed, the traveling motor drives the vehicle-type driving device to travel at a target speed, the ratio of the target speed to the input speed is defined as a conversion ratio, and the control device is configured to be capable of setting the conversion ratio according to the steering angle of the steering wheel.

In some examples, during a steering process of the vehicle-type driving device, in the case where the steering angle of the steering wheel is within a preset range, when the steering wheel has a first steering angle, the control device sets the conversion ratio to a first steering conversion ratio; and when the steering wheel has a second steering angle, the control device sets the conversion ratio to a second steering conversion ratio, where the second steering conversion ratio is different from the first steering conversion ratio.

In some examples, the vehicle-type driving device further includes a cutting motor, a first energy storage device, a detection device, and the control device, where the cutting motor is configured to drive a cutting assembly to work, the first energy storage device is configured to supply power to the traveling motor and the cutting motor and has a low power state, the detection device is configured to detect whether the first energy storage device is in the low power state, and the control device is configured to control the output states of the traveling motor and the cutting motor.

In some examples, when the first energy storage device is in the low power state, the control device reduces the torque of the traveling motor and reduces the maximum rotational acceleration of the traveling motor.

In some examples, the vehicle-type driving device further includes a cutting motor configured to drive a cutting assembly to work, a detection device for detecting a first operating parameter and a second operating parameter of the cutting motor, and the control device, where when the first operating parameter is within a first threshold range, the second operating parameter is within a second threshold range, and the duration that the first operating parameter is within the first threshold range and the second operating parameter is within the second threshold range is a first preset time, the control device controls the cutting motor to stop or slow down, the second operating parameter is different from the first operating parameter, and the second operating parameter includes at least the rotational speed of the cutting motor.

A vehicle-type driving device includes a traveling assembly including multiple traveling wheels; a steering wheel configured to control the vehicle-type driving device to steer; a traveling motor for driving the vehicle-type driving device to steer at a target angular velocity, where the ratio of the target angular velocity to the change in the steering angle of the steering wheel is defined as a steering ratio; and a control device configured to, when the traveling speed of the vehicle-type driving device is within a preset range, set the steering ratio according to a steering ratio curve function, where a variable of the steering ratio curve function includes the traveling speed of the vehicle-type driving device.

A vehicle-type driving device includes a traveling assembly including multiple traveling wheels; a steering wheel configured to control the vehicle-type driving device to steer; a traveling motor for driving the vehicle-type driving device to steer at a target angular velocity, where the ratio of the target angular velocity to the change in the steering angle of the steering wheel is defined as a steering ratio; and a control device configured to, when the traveling speed of the vehicle-type driving device is within a preset range, set the steering ratio according to multiple steering ratio curve functions, where a variable of at least one of the multiple steering ratio curve functions includes the traveling speed of the vehicle-type driving device.

In some examples, the multiple steering ratio curve function include a low-speed steering ratio curve function and a high-speed steering ratio curve function, and the preset range includes a low-speed driving threshold and a high-speed driving threshold, where when the traveling speed is less than the low-speed driving threshold, a low-speed steering ratio is set according to the low-speed steering ratio curve function; and when the traveling speed is greater than the high-speed driving threshold, a high-speed steering ratio of a traveling wheel of the multiple traveling wheels is set according to the high-speed steering ratio curve function.

In some examples, when the traveling speed of the vehicle-type driving device is between the low-speed driving threshold and the high-speed driving threshold, the low-speed steering ratio in the low-speed steering ratio curve function and the high-speed steering ratio in the high-speed steering ratio curve function are determined according to the steering angle of the steering wheel, and the steering ratio curve function at the traveling speed is determined according to the low-speed steering ratio and the high-speed steering ratio.

In some examples, when the traveling speed of the vehicle-type driving device is within the preset range, the variable of a steering ratio curve function of the multiple steering ratio curve functions includes a steering ratio coefficient of the steering wheel depending on the traveling speed of the vehicle-type driving device, and a value of the steering ratio coefficient of the steering wheel is greater than or equal to 0 and less than or equal to 1.

A vehicle-type driving device includes a body including a traveling assembly and a traveling motor for driving the traveling assembly; a steering wheel assembly; and a connection assembly connecting the steering wheel assembly to the body. The steering wheel assembly includes a steering wheel rotatable about a first axis relative to the connection assembly; a switch electrically connected to the traveling motor to control the traveling motor; an operating member including a trigger portion capable of triggering the switch, where the operating member is rotatably connected to the steering wheel with a second axis as an axis; and a reset element driving the operating member to reset, where the operating member includes a reset portion in contact with the reset element. The reset portion and the trigger portion are disposed on two sides of the second axis.

In some examples, the reset portion and the trigger portion are disposed on two sides of a plane passing through the second axis and parallel to the first axis.

In some examples, the steering wheel assembly includes a steering wheel housing, a main limiting portion is disposed on the steering wheel housing, the main limiting portion is disposed on a side of the second axis facing the trigger portion, and the main limiting portion is configured to limit the displacement of the trigger portion when the trigger portion triggers the switch.

In some examples, the main limiting portion includes a first limiting block and a second limiting block, and the operating member is provided with a first limiting portion matching and limiting the first limiting block and a second limiting portion matching and limiting the second limiting block.

In some examples, an auxiliary limiting portion is disposed on the steering wheel housing, the auxiliary limiting portion is disposed on a side of the second axis facing the reset portion, and the auxiliary limiting portion is configured to limit the displacement of the trigger portion when the trigger portion triggers the switch.

In some examples, at least two reset elements are provided.

In some examples, the trigger portion is a trapezoidal structure, the trigger portion is provided with a trigger surface for triggering the switch, and a reinforced structure is disposed on a side of the trigger portion opposite to the trigger surface.

In some examples, the switch is a micro rocker switch.

In some examples, a spacer is disposed between the switch and the trigger portion of the operating member, and the spacer is elastic deformable.

In some examples, the operating member includes a toggle and a trigger, the trigger is rotatably connected to the steering wheel housing with the second axis as an axis, an end of the toggle is detachably connected to the trigger, and the other end of the toggle is disposed on an outer side of the steering wheel housing.

A vehicle-type driving device includes a traveling assembly including multiple traveling wheels; a traveling motor configured to drive the traveling assembly; a first energy storage device configured to supply power to at least the traveling motor so that the traveling motor drives the traveling assembly to operate; and a second energy storage device configured to, when the power of the first energy storage device is less than a preset value and/or when an electrical energy transmission path from the first energy storage device to the traveling motor fails or is cut off, serve as an electric power source to control the traveling motor to enter a parking mode.

In some examples, a controller unit and a drive control unit are further included, and the controller unit is capable of controlling the drive control unit so that the traveling motor drives the traveling assembly to operate.

In some examples, when the power of the first energy storage device is greater than or equal to the preset value, the first energy storage device serves as an electric power source so that the drive control unit controls the traveling motor to enter the parking mode.

In some examples, the second energy storage device serves as the electric power source so that the drive control unit controls the traveling motor to enter the parking mode.

In some examples, the second energy storage device includes a capacitive power supply, where when the power of the first energy storage device is greater than the preset value, the first energy storage device is capable of charging the capacitive power supply; and when the power of the first energy storage device is less than the preset value, the capacitive power supply serves as an electric power source so that the drive control unit controls the traveling motor to enter the parking mode.

In some examples, the second energy storage device further includes a first energy storage assembly, where when the traveling assembly coasts, the back electromotive force generated by the traveling motor charges the first energy storage assembly, and the first energy storage assembly charges the capacitive power supply when the power of the capacitive power supply is less than a preset power value.

In some examples, the second energy storage device includes a second energy storage assembly, where when the power of the first energy storage device is less than the preset value, the second energy storage assembly serves as an electric power source so that the drive control unit controls the traveling motor to enter the parking mode.

In some examples, the drive control unit includes a switching element, and the switching element is powered and triggered to control the traveling motor to enter the parking mode.

In some examples, three phases of the traveling motor are short-circuited so that the traveling motor enters the parking mode.

In some examples, the parking mode is a mode in which the traveling motor slows down or stops.

A vehicle-type driving device includes a cutting assembly including a mowing element for mowing grass; a chassis supporting the cutting assembly; a cutting motor configured to drive the cutting assembly; a detection device for detecting a first operating parameter and a second operating parameter of the cutting motor; and a control device for controlling the cutting motor to stop or slow down when the first operating parameter is within a first threshold range, the second operating parameter is within a second threshold range, and the duration that the first operating parameter is within the first threshold range and the second operating parameter is within the second threshold range is a first preset time. The second operating parameter is different from the first operating parameter, and the second operating parameter includes at least the rotational speed of the cutting motor.

In some examples, the control device controls the cutting motor to stop in a second preset time.

In some examples, the second preset time is greater than 1s.

In some examples, the first operating parameter includes the bus current or the phase current.

In some examples, the first operating parameter includes the bus current, and the first threshold range is greater than 0 A and less than or equal to 3 A.

In some examples, the first operating parameter includes the phase current, and the first threshold range is greater than 0 A and less than or equal to 4 A.

In some examples, the second operating parameter includes the actual rotational speed and the target rotational speed of an electric motor, and the second threshold range includes an actual rotational speed range and a target rotational speed range of the electric motor, where when the actual rotational speed of the electric motor is within the actual rotational speed range of the electric motor for the first preset time and the target rotational speed of the electric motor is within the target rotational speed range of the electric motor for the first preset time, the control device controls the cutting motor to stop or slow down.

In some examples, the actual rotational speed range of the electric motor is greater than or equal to 500 r/min, and the target rotational speed range of the electric motor is greater than or equal to 1950 r/min.

In some examples, the vehicle-type driving device further includes a traveling assembly, a traveling motor for driving the traveling assembly to operate, a display screen, a switch panel, and a battery management system, where before the control device controls the cutting motor to start, whether the traveling motor, the display screen, the switch panel, and the battery management system communicate normally with the control device separately is determined; and if so, the cutting motor starts.

In some examples, when the rotational speed of the traveling motor is greater than a preset rotational speed value, the cutting motor stops.

A vehicle-type driving device includes a traveling assembly including multiple traveling wheels; a steering wheel configured to control the vehicle-type driving device to steer; a speed setting device for setting the traveling speed of the vehicle-type driving device, where the traveling speed set by the speed setting device is defined as the input speed; a traveling motor for driving the vehicle-type driving device to travel at the target speed, where the ratio of the target speed to the input speed is defined as a conversion ratio; and a control device configured to set the conversion ratio according to a steering angle of the steering wheel. During a steering process of the vehicle-type driving device, in the case where the steering angle of the steering wheel is within a preset range, when the steering wheel has a first steering angle, the control device sets the conversion ratio to a first steering conversion ratio; and when the steering wheel has a second steering angle, the control device sets the conversion ratio to a second steering conversion ratio, where the second steering conversion ratio is different from the first steering conversion ratio.

In some examples, the steering process of the vehicle-type driving device includes a first steering stage and a second steering stage, where the steering angle in the first steering stage is the first steering angle, the steering angle in the second steering stage is the second steering angle, the first steering conversion ratio remains unchanged when the vehicle-type driving device is in the first steering stage, and the second steering conversion ratio changes linearly when the vehicle-type driving device is in the second steering stage.

In some examples, when the first steering angle is greater than or equal to 0° and less than or equal to 25°, the first steering conversion ratio is 100%.

In some examples, a linear equation of the second steering conversion ratio in the second steering stage is y = -0.4516x + 111.3, where x denotes the second steering angle, y denotes the second steering conversion ratio, and the second steering angle is greater than 25° and less than or equal to 180°.

In some examples, the steering wheel is capable of controlling the vehicle-type driving device to straighten out, and a direction in which the vehicle-type driving device straightens out is opposite to a direction in which the vehicle-type driving device steers.

In some examples, before the vehicle-type driving device straightens out, the minimum speed of the vehicle-type driving device during the steering process is acquired, where the minimum speed is the initial target speed of the vehicle-type driving device during a straightening-out process.

In some examples, during the straightening-out process of the vehicle-type driving device, when the steering wheel has a first straightening-out angle, the control device sets the conversion ratio to a first straightening-out conversion ratio; and when the steering wheel has a second straightening-out angle, the control device sets the conversion ratio to a second straightening-out conversion ratio, where the second straightening-out conversion ratio is different from the first straightening-out conversion ratio.

In some examples, the straightening-out process of the vehicle-type driving device includes a first straightening-out stage and a second straightening-out stage, where a straightening-out angle in the first straightening-out stage is the first straightening-out angle, a straightening-out angle in the second straightening-out stage is the second straightening-out angle, the first straightening-out conversion ratio remains unchanged when the vehicle-type driving device is in the first straightening-out stage, and the second straightening-out conversion ratio changes linearly when the vehicle-type driving device is in the second straightening-out stage.

In some examples, when the first straightening-out angle is greater than or equal to 25° and less than or equal to 180°, the first straightening-out conversion ratio is 30%.

In some examples, when the second steering straightening-out angle is greater than or equal to 0° and less than 25°, the second straightening-out conversion ratio changes from 30% to 100% within a preset time.

A vehicle-type driving device includes a traveling assembly including traveling wheels; a traveling motor configured to drive the traveling assembly; a cutting motor configured to drive a cutting assembly to operate; a first energy storage device configured to supply power to the traveling motor and the cutting motor, where the first energy storage device has a low power state; a detection device configured to detect whether the first energy storage device is in the low power state; and a control device configured to control the output states of the traveling motor and the cutting motor. When the first energy storage device is in the low power state, the control device reduces the torque of the traveling motor and reduces the maximum rotational acceleration of the traveling motor.

In some examples, the detection device detects whether the first energy storage device is in the low power state by detecting the voltage or the remaining power of the first energy storage device, where when the voltage or the remaining power of the first energy storage device is lower than or equal to a first preset level, the first energy storage device is in the low power state.

In some examples, when the first energy storage device is in the low power state, the control device reduces the maximum rotational speed of the traveling motor.

In some examples, when the first energy storage device is in the low power state, the control device reduces the torque of the cutting motor.

In some examples, when the first energy storage device is in the low power state, the maximum rotational speed of the cutting motor remains unchanged compared to the preset maximum rotational speed of the cutting motor, and the maximum rotational acceleration of the cutting motor remains unchanged compared to the preset maximum rotational acceleration of the cutting motor.

In some examples, when the voltage or the remaining power of the first energy storage device is lower than or equal to a second preset level lower than the first preset level, the first energy storage device is in a deep low power state, and the control device disables the power output of the traveling motor and the cutting motor.

In some examples, in the low power state, when the voltage or the remaining power of the first energy storage device increases to be higher than the first preset level, the first energy storage device exits the low power state.

In some examples, after the first energy storage device exits the low power state, the control device increases the torque of the traveling motor and increases the maximum rotational acceleration of the traveling motor.

In some examples, when the first energy storage device is in the low power state, the control device reduces the maximum rotational speed of the traveling motor and the torque of the cutting motor; and after the first energy storage device exits the low power state, the control device increases the maximum rotational speed of the traveling motor and the torque of the cutting motor.

In some examples, the vehicle-type driving device is a riding mower.

The present application has the beneficial effects below.

The present application provides the vehicle-type driving device. The steering ratio is the ratio of the target angular velocity to the change in the steering angle of the steering wheel. The steering ratio is set according to the steering ratio curve function when the traveling speed is within the preset range, and then the traveling speed of the vehicle-type driving device is determined according to the steering ratio and the steering angle of the steering wheel. The vehicle-type driving device travels at the traveling speed. In this manner, the traveling speed of the vehicle-type driving device is adjusted according to the steering angle of the steering wheel so that the steering feel of the vehicle-type driving device at different speeds can be improved, the problem of poor operating feel for a driver driving and turning can be solved, and the operating experience of the user can be improved.

### BRIEF DESCRIPTION OF DRAWINGS

FIG. 1 is a perspective view of a riding mower according to an example of the present application.
FIG. 2 is a bottom view of the riding mower in FIG. 1.
FIG. 3 is a perspective view of a steering wheel assembly, a connection assembly, and a chassis of the riding mower in FIG. 2.
FIG. 4A is a perspective view of the steering wheel assembly in FIG. 3 at a first working position.
FIG. 4B is a perspective view of the steering wheel assembly in FIG. 3 at a second working position.
FIG. 4C is a perspective view of the steering wheel assembly in FIG. 3 at a storage position.
FIG. 5 is an exploded view of the connection assembly and a support rod in FIG. 3.
FIG. 6A is a perspective view of a steering wheel assembly from a first perspective.
FIG. 6B is a perspective view of a steering wheel assembly from a second perspective.
FIG. 7 is a partial sectional view of a steering wheel assembly.
FIG. 8A is a schematic view illustrating a state in which an operating member does not trigger a switch.
FIG. 8B is a schematic view illustrating a state in which an operating member triggers a switch.
FIG. 9 is a partial sectional view of the steering wheel assembly in FIG. 7.
FIG. 10A is a structural view of a steering wheel.
FIG. 10B is a sectional view of FIG. 10A.
FIG. 11 is a partial structural view of a steering wheel rotary assembly and a steering wheel rotary damping assembly.
FIG. 12 is a first exploded view of the partial structure of a steering wheel rotary assembly.
FIG. 13 is a second exploded view of the partial structure of a steering wheel rotary assembly.
FIG. 14 is a structural view of a steering wheel rotary damping assembly.
FIG. 15 is a partial sectional view of FIG. 14.
FIG. 16 is a structural view of an accelerator module.
FIG. 17 is a first exploded view of a pedal assembly.
FIG. 18 is a second exploded view of a pedal assembly.
FIG. 19 is a structural view of an accelerator housing.
FIG. 20 is an exploded view of an accelerator housing and a pedal circuit board.
FIG. 21 is a sectional view of an accelerator assembly from a first perspective.
FIG. 22 is a sectional view of an accelerator assembly from a second perspective.
FIG. 23 is an exploded view of the internal partial structure of an accelerator assembly.
FIG. 24 is a block diagram of a first structure of a vehicle-type driving device in a parking mode.
FIG. 25 is a block diagram of a second structure of a vehicle-type driving device in a parking mode.
FIG. 26 is a flowchart of a vehicle-type driving device in a parking mode.
FIG. 27 is a schematic diagram of a driver circuit of a vehicle-type driving device.
FIG. 28 is a flowchart illustrating the detection of a cutting assembly of a vehicle-type driving device.
FIG. 29 is a schematic diagram of a conversion ratio when turning and a conversion ratio in the first stage of straightening out of a vehicle-type driving device.
FIG. 30 is a schematic diagram of a conversion ratio in the second stage of steering and straightening-out of a vehicle-type driving device.
FIG. 31 is a flowchart of a steering process of a vehicle-type driving device.
FIG. 32 is a flowchart of a straightening-out process of a vehicle-type driving device.
FIG. 33 is a schematic diagram of a steering ratio of a vehicle-type driving device when turning.
FIG. 34 is a schematic diagram of steering ratios of a left wheel and a right wheel of a vehicle-type driving device when turning.
FIG. 35 is a flowchart of acquiring a steering ratio of a vehicle-type driving device.
FIG. 36 is a flowchart of a control process of a vehicle-type driving device.
FIG. 37 is a block diagram of a control device of a vehicle-type driving device.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

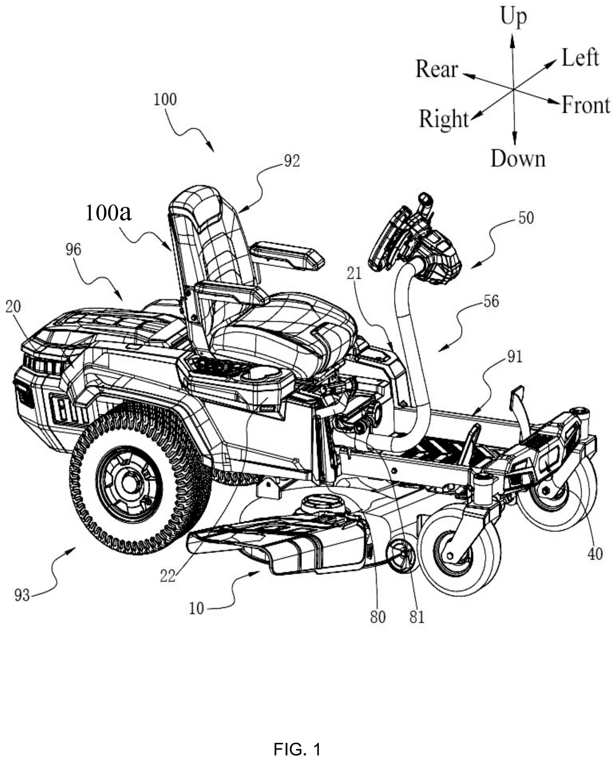

As shown in FIG. 1, this example discloses a vehicle-type driving device 100, specifically, a riding mower. A user can sit on and operate the vehicle-type driving device 100 to trim lawns and other vegetation.

In this specification, directions such as the front, rear, left, right, up, and down are described as directions shown in FIG. 1. When the user sits on the vehicle-type driving device 100 on the ground, it is defined that the direction which the user faces is front, the direction which the user faces away from is rear, the direction on the left-hand side of the user is left, the direction on the right-hand side of the user is right, the direction towards the ground is down, and the direction away from the ground is up.

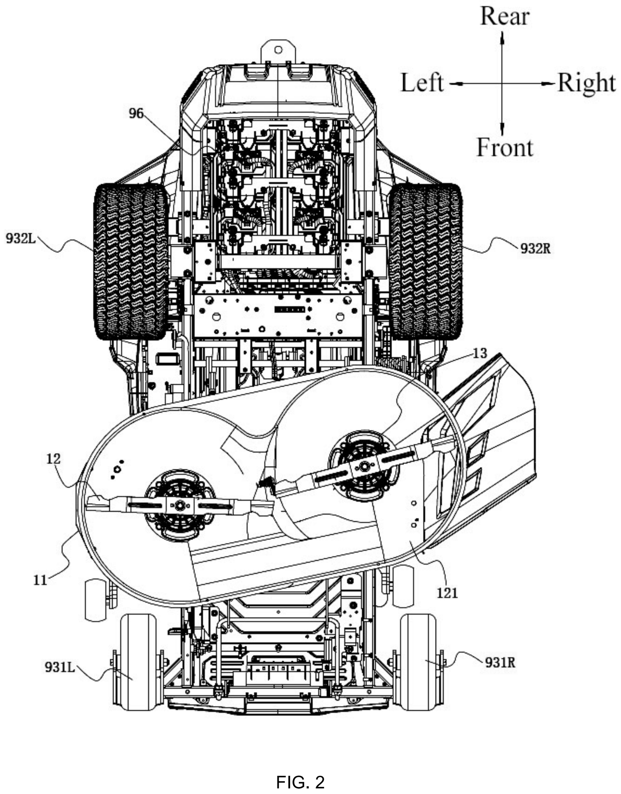

As shown in FIGS. 1 and 2, the vehicle-type driving device 100 includes a body 100a, and the body 100a includes a cutting assembly 10, a chassis 91, a seat 92, a housing system 20, a traveling assembly 93, a traveling motor for driving the traveling assembly 93, a power supply assembly 96, an illumination system 40, and an operating assembly 50. The chassis 91 and the housing system 20 form the frame structure of the body 100a of the vehicle-type driving device 100, the frame structure of the body 100a is used for mounting the cutting assembly 10, the seat 92, the power supply assembly 96, and the illumination system 40, and the traveling assembly 93 is used for supporting the frame structure of the body 100a. The vehicle-type driving device 100 supplies energy to the cutting assembly 10, the traveling assembly 93, the illumination system 40, and the like through a power assembly. In this example, the power assembly of the vehicle-type driving device 100 is the power supply assembly 96, and the power supply assembly 96 supplies electrical energy to assemblies of the vehicle-type driving device 100 so that the vehicle-type driving device 100 can be used as a power tool. The electric vehicle-type driving device 100 is more environmentally friendly and more energy-efficient than a fuel-based vehicle-type driving device 100.

The cutting assembly 10 is used for outputting power to implement the function of the vehicle-type driving device 100. The cutting assembly 10 serves as a power output member, and the body 100a supports the power output member. Referring to FIG. 2, the cutting assembly 10 includes a cutting deck 11, mowing elements 12, and cutting motors 13 for driving the mowing elements 12. In some examples, the power of the cutting motor 13 is about 1500 W. In some examples, the power of the cutting motor 13 is about 3000 W. The mowing element 12 is driven by the cutting motor 13 to rotate at a high speed to cut the vegetation. For example, the mowing element 12 is a blade for cutting grass on a lawn. The cutting deck 11 surrounds a mowing space 121 for accommodating at least part of the mowing element 12, that is to say, the mowing element 12 is at least partially accommodated in the cutting deck 11. The cutting motor 13 is used for driving the mowing element 12 to rotate. The cutting assembly 10 is disposed below the chassis 91. In some examples, two mowing elements 12 may be provided, two cutting motors 13 may be provided, and correspondingly, the two cutting motors 13 drive the two mowing elements 12, respectively. In another example, three mowing elements 12 may be provided, three cutting motors 13 may be provided, and correspondingly, the three cutting motors 13 drive the three mowing elements 12, respectively. The mowing element 12 is disposed in the mowing space 121 surrounded by the cutting deck 11. The mowing space 121 is open downward so that the mowing elements 12 can perform cutting operations on the vegetation below the mowing space 121.

As shown in FIGS. 1 and 2, the chassis 91 basically extends along the front and rear direction of the vehicle-type driving device 100; the cutting assembly 10, the housing system 20, the seat 92, the traveling assembly 93, the power supply assembly 96, and the illumination system 40 are all mounted on the chassis 91; and the chassis 91 is used for supporting the body of the entire vehicle-type driving device 100. The traveling assembly 93 is used for supporting the chassis 91 so that the vehicle-type driving device 100 can travel on the ground, and the traveling assembly 93 includes a first traveling assembly 931 and a second traveling assembly 932. In this example, the first traveling assembly 931 is a front traveling assembly and includes two first traveling wheels, that is, a first left traveling wheel 931L and a first right traveling wheel 931R. The second traveling assembly 932 is a rear traveling assembly and includes two second traveling wheels, that is, a second left traveling wheel 932L and a second right traveling wheel 932R. The radius of the second traveling wheels is greater than the radius of the first traveling wheels. The first left traveling wheel 931L and the first right traveling wheel 931R are connected via a front axle 934. The second left traveling wheel 932L and the second right traveling wheel 932R are connected via a rear axle. The traveling assembly 93 further includes the traveling motor for driving the second traveling assembly 932. In some examples, two traveling motors are provided, that is to say, each of the second left traveling wheel 932L and the second right traveling wheel 932R is independently driven by a respective traveling motor. In some examples, the power of the traveling motor is about 1500 W. In some examples, the power of the traveling motor is about 3000 W.

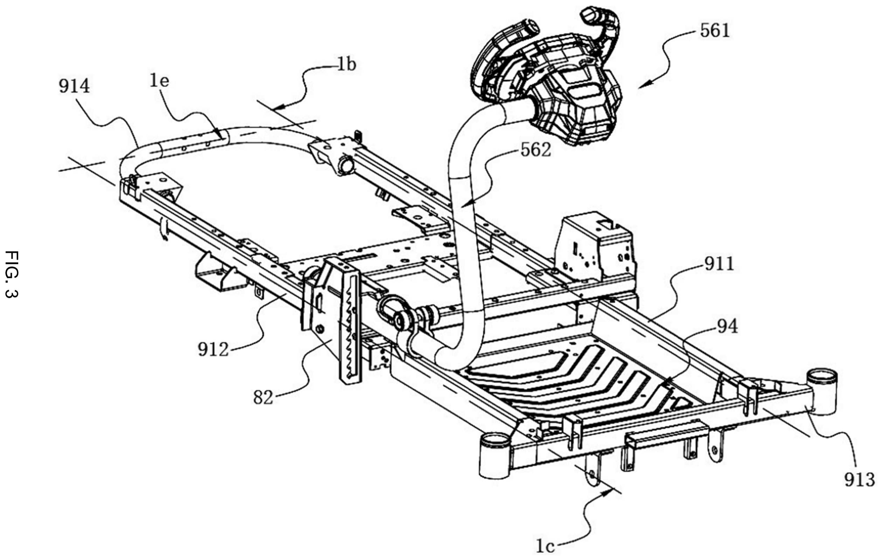

Referring to FIG. 3, the chassis 91 includes rails and beams. In some examples, the chassis 91 includes two rails which are a first rail 911 and a second rail 912, respectively. The chassis 91 further includes two beams which are a first beam 913 and a second beam 914, respectively. The first rail 911 is disposed on the left side of the seat 92, and the second rail 912 is disposed on the right side of the seat 92. The first rail 911 extends along a first straight line 1b, and the second rail 912 extends along a second straight line 1c, where the first straight line 1b and the second straight line 1c are parallel to each other. In this example, the first rail 911 and the second rail 912 extend along the front and rear direction of the vehicle-type driving device 100, where the extension directions of the first rail 911 and the second rail 912 are parallel to each other. The first beam 913 is located basically at the front end of the vehicle-type driving device 100. In this manner, the first beam 913 also serves as a front bumper for protecting the front end of the vehicle-type driving device 100 from being damaged. The second beam 914 is located basically at the rear end of the vehicle-type driving device 100. In this manner, the second beam 914 also serves as a rear bumper for protecting the rear end of the vehicle-type driving device 100 from being damaged. The first beam 913 and the second beam 914 at least partially extend along a transverse straight line 1e, where the transverse straight line 1e extends along the left and right direction of the vehicle-type driving device 100. In this example, the extension directions of the first beam 913 and the second beam 914 are parallel to each other, while the transverse straight line 1e is perpendicular to the first straight line 1b and the second straight line 1c. The first rail 911, the second rail 912, the first beam 913, and the second beam 914 may be fixed together through fasteners such as bolts or may be fixed together through welding.

As shown in FIGS. 1 to 3, the housing system 20 includes a left cover 21 and a right cover 22. The left cover 21 is disposed on the left side of the seat 92, and the right cover 22 is disposed on the right side of the seat 92. The left cover 21 at least partially covers the second left traveling wheel 932L, and the right cover 22 at least partially covers the second right traveling wheel 932R. The specific structures and materials of the left cover 21 and the right cover 22 are not limited in the present application. In this example, the housing system 20 further includes a base plate 94 sandwiched between the first rail 911 and the second rail 912 so that when sitting on the vehicle-type driving device 100, the user may step on the base plate 94.

The power supply assembly 96 is used for supplying electric power to the cutting assembly 10, the traveling assembly 93, the illumination system 40, and the like, where the cutting motor 13, the traveling motor, and the illumination system 40, as electrical devices included in the vehicle-type driving device 100, can convert the electrical energy into other forms of power. The power supply assembly 96 includes at least one battery pack for storing the electrical energy. In some examples, the voltage of the battery pack is about 56 V. In some examples, the power supply assembly 96 is disposed at the rear of the vehicle-type driving device 100. The power supply assembly 96 may be disposed behind the seat 92. In other examples, the power supply assembly 96 may be disposed at the front of the vehicle-type driving device 100. In some examples, the power supply assembly 96 includes six battery packs. The six battery packs are arranged in three rows along the front and rear direction, and two battery packs are arranged along the left and right direction in each row. In addition to that the power supply assembly 96 includes only the battery packs, the power supply assembly 96 may be configured to be a combination of a built-in cell module and an external battery pack. The built-in cell module has less cost and a more compact structure than the detachable external battery pack, thereby providing more adequate energy storage for the vehicle-type driving device 100 while saving space and cost. In addition, a certain number of detachable external battery packs are provided so that the flexibility of the power supply assembly 96 is ensured. For example, the user may take only the battery packs away for charging and does not need to drive the entire vehicle-type driving device 100 to a charging station; when the user is inconvenient or has no time to charge the built-in cell module of the vehicle-type driving device 100, the external battery packs are inserted so that the short-time mowing requirement can be satisfied.

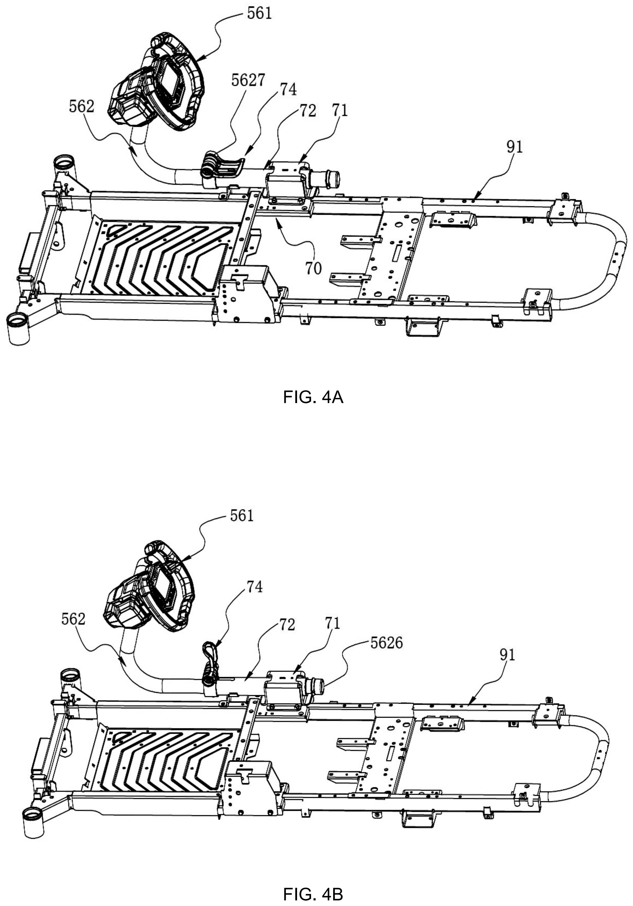

As shown in FIGS. 1, 3, and 5, the operating assembly 50 includes a steering wheel assembly 56. In an example, the steering wheel assembly 56 includes a steering wheel 561 operable by the user to rotate and a support rod 562 configured to connect the steering wheel 561 to the chassis 91. The support rod 562 has a first end 5621 connected to the steering wheel 561 and a second end 5622 connected to the chassis 91. The support rod 562 is configured to be a hollow tube so that while the cost is saved, the wires of the steering wheel assembly 56 are allowed to pass through the hollow tube, thereby improving the safety and aesthetics of the wiring. The steering wheel assembly 56 is mounted to the chassis 91 through a connection assembly 70. The support rod 562 is mounted to the rail of the chassis 91 through the connection assembly 70. In some examples, the support rod 562 is mounted to the second rail 912 on the right side of the seat 92 through the connection assembly 70, which is convenient for the user to get on and off from the left side of the vehicle-type driving device 100. In other examples, the support rod 562 may be mounted to the first rail 911 on the left side of the seat 92 through the connection assembly 70. Referring to FIGS. 4A and 4B, the connection assembly 70 includes a locked position and an unlocked position, where when the connection assembly 70 is at the unlocked position, the steering wheel 561 and the support rod 562 can slide back and forth relative to the seat 92 so that the steering wheel assembly 56 is switchable between at least a first working position and a second working position. In some examples, the first working position and the second working position are arranged along the front and rear direction of the vehicle-type driving device 100. The first working position is shown in FIG. 4A, and the second working position is shown in FIG. 4B. Of course, the steering wheel assembly 56 may have more working positions.

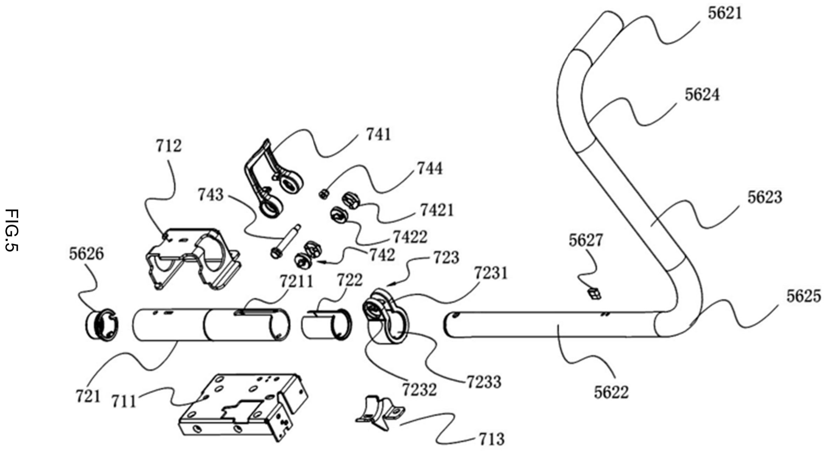

As shown in FIGS. 4A, 4B, and 5, the support rod 562 includes the first end 5621 and the second end 5622, the first end 5621 is fixedly connected to the steering wheel, and the second end 5622 is connected to the connection assembly 70 so that the support rod 562 is mounted to the second rail 912. When the connection assembly 70 is at the unlocked position, the second end 5622 is slidable along the extension direction of the rail. The first end 5621 is a straight tube, the second end 5622 is also a straight tube, and the first end 5621 and the second end 5622 are connected to each other through an intermediate portion 5623. In some examples, the intermediate portion 5623 is also a straight tube, the first end 5621 and the intermediate portion 5623 are connected to each other through a first bent portion 5624, and the second end 5622 and the intermediate portion 5623 are connected to each other through a second bent portion 5625. The first end 5621, the first bent portion 5624, the intermediate portion 5623, the second bent portion 5625, and the second end 5622 described above are used only for identifying different portions of the support rod 562 and do not indicate that these portions are formed by separate or differentiated components. In fact, the first end 5621, the first bent portion 5624, the intermediate portion 5623, the second bent portion 5625, and the second end 5622 may be integrally formed into a whole or may be multiple different components fixed together through the welding, threaded connections, fastener connections, or the like.

The connection assembly 70 includes a bracket assembly 71 and a bushing assembly 72, where the bushing assembly 72 is sleeved on the circumference of the second end 5622, and the bracket assembly 71 is fixed on the rail and supports the bushing assembly 72 and the support rod 562. The bracket assembly 71 is covered by the right cover 22. As shown in FIG. 5, the bracket assembly 71 includes a substrate 711 and a bracket 712, where the substrate 711 is fixedly mounted to the second rail 912, the bracket 712 is fixed on the substrate 711, an open channel is formed in the extension direction of the second rail 912, and the second end 5622 of the support rod 562 and the bushing assembly 72 pass through the channel and are set up on the bracket 712.

In some examples, the substrate 711 is fixed to the second rail 912 through fasteners such as screws or bolts. The width of the substrate 711 is greater than the width of the second rail 912. To make the substrate 711 firmer, edges protruding downward are formed around the substrate 711, and the edges form a groove with a width basically the same as the width of the second rail 912. In this manner, the edges of the substrate 711 are clamped on the second rail 912, thereby preventing the substrate 711 from wobbling or overturning. The bracket 712 is fixed to the substrate 711 through fasteners such as bolts and nuts, and the second end 5622 of the support rod 562 and the bushing assembly 72 pass through the bracket 712. In some examples, the bushing assembly 72 is fixed to the bracket 712. In some examples, the second end 5622 of the support rod 562 and the bushing assembly 72 are set up slightly above the second rail 912 or suspended from the second rail 912 by the bracket 712.

The bushing assembly 72 includes an outer tube 721, a bushing 722, and a hoop 723. The outer tube 721 is a hollow tube and extends along the extension direction of the second rail 912. For ease of description, an end of the outer tube 721 toward the front of the vehicle-type driving device 100 is defined as a front end, and an end of the outer tube 721 toward the rear of the vehicle-type driving device 100 is defined as a rear end. The outer tube 721 is sleeved on the circumference of the second end 5622 of the support rod 562, that is to say, the support rod 562 extends from two ends of the outer tube 721. The end of the support rod 562 extends from the rear end of the outer tube 721, and a portion of the second end 5622 of the support rod 562 and the second bent portion 5625 extend from the front end of the outer tube 721. The bushing 722 is sandwiched between the outer tube 721 and the second end 5622 of the support rod 562 and achieves the purpose of smooth sliding and buffering. The bushing 722 may cover the inner wall of the outer tube 721 or may be separately disposed at two ends of the outer tube 721. In some examples, the bushing 722 is made of a rubber material.

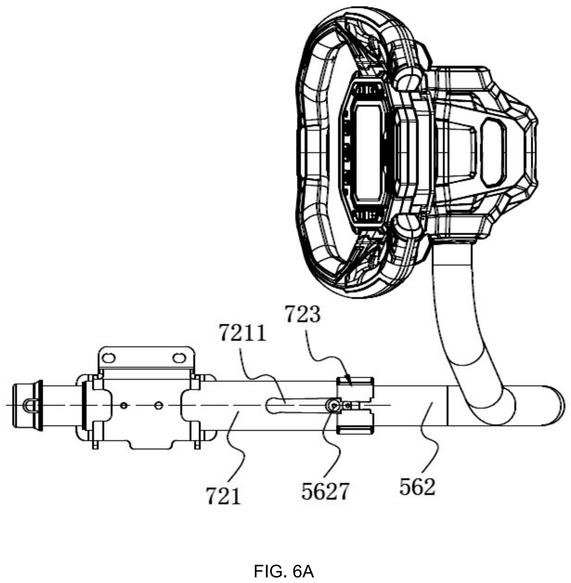

At least one end of the outer tube 721 has a variable diameter. The diameter of the outer tube 721 is reduced and increased so that the connection assembly 70 is switchable between the locked position and the unlocked position. In some examples, as shown in FIG. 6A, a strip groove 7211 extending along the extension direction of the second rail 912 is formed at the front of the outer tube 721. The strip groove 7211 is in a trumpet shape, and the hoop 723 is sleeved at the front end of the outer tube 721. The hoop 723 includes an annular portion 7233 sleeved on the outer tube 721 and two extension arms, and an opening deformation region is formed between the two extension arms. When the distance between a first extension arm 7231 and a second extension arm 7232 is reduced, the opening of the hoop 723 is tightened, and the diameter of the outer tube 721 is reduced. At this time, the connection assembly 70 is at the locked position. When the distance between the first extension arm 7231 and the second extension arm 7232 increases, the opening of the hoop 723 is loosened, and the diameter of the outer tube 721 is increased. At this time, the connection assembly 70 is at the unlocked position. In some examples, the bushing 722 is disposed at the front end of the outer tube 721. In this manner, when the opening of the hoop 723 is tightened, a friction force between the outer tube 721 and the second end 5622 of the support rod 562 is increased, thereby making the position of the support rod 562 firm. In some examples, the bracket assembly 71 further includes a holder 713 disposed between the second rail 912 and the outer tube 721 of the bushing assembly 72, where an end of the holder 713 is fixed to the second rail 912, and the other end of the holder 713 supports the outer tube 721 so that the bracket assembly 71 has a stronger load-bearing capacity, and the steering wheel assembly 56 is firmer after being mounted.

In some examples, when the connection assembly 70 is at the unlocked position, the position of the outer tube 721 is unchanged, and when adjusted by the user, the second end 5622 of the support rod 562 is slidable along the front and rear direction of the vehicle-type driving device 100 relative to the outer tube 721. In this manner, when users having different heights and body types sit on the vehicle-type driving device 100, the position of the steering wheel assembly 56 can be adjusted according to their own needs, thereby improving comfort and ergonomic experience. In order that the second end 5622 of the support rod 562 can have a sufficient adjustment space, for example, a sliding stroke greater than or equal to10 cm, the length of the outer tube 721 is less than the length of the straight tube of the second end 5622, and the straight tube of the second end 5622 cannot be too short. In some examples, the length of the straight tube of the second end 5622 is greater than or equal to 20 cm and less than or equal to 80 cm. In some examples, the length of the straight tube of the second end 5622 is greater than or equal to 40 cm and less than or equal to 60 cm.

Limiting members are further formed or mounted on the support rod 562. A first limiting member 5626 is disposed at the end of the support rod 562, that is, the end of the second end 5622 of the support rod 562. In this manner, when the support rod 562 slides forward, the support rod 562 and the rear end of the outer tube 721 form an end-surface limitation so that the end of the support rod 562 is prevented from sliding into the outer tube 721, the support rod 562 is prevented from sliding out inadvertently, and the positions of the support rod 562 and the steering wheel 561 are prevented from being too forward. The first limiting member 5626 may be a ferrule sleeved at the end of the support rod 562. The maximum diameter of the ferrule is greater than the diameter of the support rod 562. In some examples, the maximum diameter of the ferrule is approximately equal to the diameter of the rear end of the outer tube 721. In some examples, the bushing 722 extends out to enclose the rear end of the outer tube 721, thereby dampening the impact between the rear end of the outer tube 721 and the ferrule. In some examples, a second limiting member 5627 is further provided. As shown in FIG. 4A, the second limiting member 5627 may be a stop block protruding from the surface of the support rod 562, and the stop block may be a waist-shaped block. The width of the stop block is slightly less than the width of the strip groove 7211 of the outer tube 721. In this manner, when the support rod 562 slides back and forth, the stop block clamped in the strip groove 7211 moves back and forth. On the one hand, the circumferential displacement of the support rod 562 can be prevented, that is, the second end 5622 is prevented from rotating in the outer tube 721, thereby preventing the steering wheel assembly 56 from falling down when the bushing assembly 72 is loosened. On the other hand, the support rod 562 is prevented from sliding too backward, thereby preventing the positions of the support rod 562 and the steering wheel 561 from being too backward. When the stop block slides backward to a certain extent on the support rod 562, the portion of the strip groove 7211 with the minimum groove width has an interference fit with the stop block so that the support rod 562 cannot slide backward any further, thereby ensuring that the support rod 562 can be fixed in any range within the telescopic stroke without wobbling. In another example, as shown in FIG. 6A, the second limiting member 5627 may be a bolt cap of at least one bolt mounted on the support rod 562. As the distance between the first extension arm 7231 and the second extension arm 7232 of the hoop 723 is reduced, the groove diameter of the strip groove 7211 is reduced so that the second limiting member 5627 is clamped, and the support rod 562 is prevented from rotating in the outer tube 721, thereby preventing the steering wheel assembly 56 from falling down when the bushing assembly 72 is loosened.

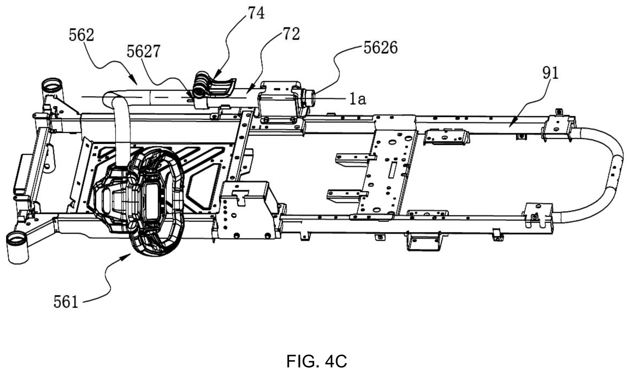

The steering wheel assembly 56 further has a storage position. When the connection assembly 70 is at the unlocked position, the support rod 562 slides forward such that the second limiting member 5627 is located in front of the outer tube 721 and separated from the strip groove 7211 of the outer tube 721. At this time, the second limiting member 5627 no longer limits the rotation of the support rod 562, and the second end 5622 of the support rod 562 is rotatable in the outer tube 721, that is to say, the support rod 562 is rotatable about an axis 1a parallel to the rail so that the steering wheel assembly 56 is switchable between the storage position and the working positions. Referring to FIG. 4C, when the support rod 562 rotates until the steering wheel 561 is placed on the chassis 91 or supported by the chassis 91, the steering wheel assembly 56 is at the storage position. At this time, the height of the steering wheel 561 does not exceed the height of the seat 92. Therefore, the space can be saved and the steering wheel 561 is not easily damaged during transportation. Through the connection assembly 70 disclosed in this example, while sliding back and forth along the extension direction of the rail, the support rod 562 is rotatable about the axis parallel to the rail. In this manner, the working position of the steering wheel assembly 56 is adjustable, and the steering wheel assembly 56 can be stored so that the vehicle-type driving device 100 is more convenient to use.

In another example, the connection assembly 70 further includes a quick clamping assembly 74, the quick clamping assembly 74 includes a rotatable handle 741, and the handle 741 includes a first position and a second position. When the handle 741 is at the first position, the connection assembly 70 is at the unlocked position. When the handle 741 is at the second position, the connection assembly 70 is at the locked position. As shown in FIG. 4B, when the handle 741 is at the first position, the handle 741 is away from the outer tube 721. As shown in FIG. 4A, when the handle 741 is at the second position, the handle 741 is close to the outer tube 721. Through the handle 741, the user can conveniently switch the connection assembly 70 between the locked position and the unlocked position and does not need to use an additional tool such as a wrench to unlock or lock the connection assembly 70.

Optionally, as shown in FIG. 5, the quick clamping assembly 74 includes cam assemblies 742, where when handles 741 rotate, the displacement of the cam assemblies 742 about a rotation axis of the handles 741 causes the opening of the hoop 723 to be tightened or loosened. The rotation axis of the handles 741 passes through the first extension arm 7231 and the second extension arm 7232. Each of two cam assemblies 742 is disposed between the opening of the hoop 723 and a respective handle 741. That is to say, one cam assembly 742 is disposed between the first extension arm 7231 of the hoop 723 and the handle 741 on the left side of the first extension arm 7231, and the other cam assembly 742 is disposed between the second extension arm 7232 of the hoop 723 and the handle 741 on the right side of the second extension arm 7232. A long bolt 743 sequentially passes through the handles 741, the cam assemblies 742, and the hoop 723. The handles 741 and cams rotate about the long bolt, and the other end of the bolt is fixed to a nut 744, thereby limiting the axial displacement of the cams to a certain extent. Each cam assembly 742 includes two cams: a first cam 7421 and a second cam 7422. The first cam 7421 and the handle 741 rotate synchronously. Since the contact surfaces of the first cam 7421 and the second cam 7422 are step slopes, the first cam 7421 rotates to cause the displacement of the second cam 7422 about the rotation axis of the handle 741, thereby reducing or increasing the distance between the first extension arm 7231 and the second extension arm 7232 of the hoop 723.

As shown in FIGS. 1 and 3, the vehicle-type driving device 100 further includes a cutting deck height adjustment assembly 80 for adjusting the height of the cutting deck 11 relative to the vehicle frame 91. The cutting deck height adjustment assembly 80 includes a gear assembly and a linkage assembly. The gear assembly includes an adjustment member 81 and a limiting member 82. The adjustment member 81 is operable by the user so that different heights of the cutting deck 11 are set. The limiting member 82 includes multiple gears and is used for limiting the adjustment member 81 to a preset gear. In this example, the limiting member 82 is mounted to the bracket assembly 71.

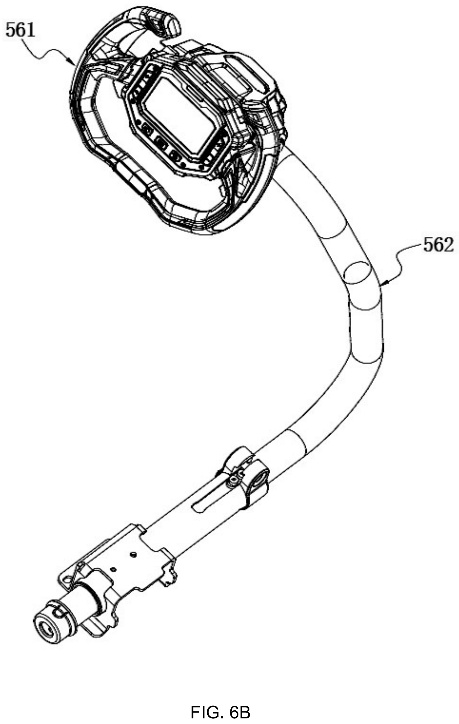

As shown in FIGS. 6B to 9, the steering wheel assembly 56 includes the steering wheel 561 and a steering wheel housing 563. The steering wheel 561 is rotatable about a first axis 1f relative to the connection assembly 70, and the steering wheel housing 563 supports the steering wheel 561. The steering wheel assembly 56 further includes a switch 564 and an operating member 565. The switch 564 is electrically connected to the traveling motor to control the start or stop of the traveling motor. The operating member 565 includes a trigger portion 5651 for triggering the switch 564. The operating member 565 is rotatably connected to the steering wheel housing 563 about a second axis 1g. The operating member 565 is operated to cause the trigger portion 5651 of the operating member 565 to trigger the switch 564, thereby controlling the start or stop of the traveling motor to start or stop the vehicle-type driving device 100. The operating member 565 is connected to reset elements 566, and the reset elements 566 drive the operating member 565 to reset. The operating member 565 includes reset portions 5652 each of which is in contact with a respective reset element 566. When the operating member 565 is not pressed by an external force, the reset elements 566 cause the trigger portion 5651 of the operating member 565 to stop being in contact with the switch 564 and return to the initial position. The reset portion 5652 and the trigger portion 5651 are disposed on two sides of the second axis 1g, the reset element 566 is away from the trigger portion 5651, and the reset element 566 does not apply a force to the trigger portion 5651 so that the deformation of the trigger portion 5651 of the operating member 565 is reduced, the probability of trigger failure of the operating member 565 is reduced, and the service life of the operating member 565 is extended.

In some examples, the reset portion 5652 and the trigger portion 5651 are disposed on two sides of a plane passing through the second axis 1g and parallel to the first axis 1f.

A main limiting portion 567 is further disposed on the steering wheel housing 563. The main limiting portion 567 is disposed on a side of the second axis 1g facing the trigger portion 5651. The main limiting portion 567 is configured to limit the displacement of the trigger portion 5651 when the trigger portion 5651 triggers the switch 564. The main limiting portion 567 is disposed on a side of the second axis 1g facing the trigger portion 5651 so that the switch 564 is prevented from being pressed too much, thereby extending the service life of the switch 564 and increasing the stroke by which the operating member 565 is pressed. In addition, the main limiting portion 567 is disposed on a side of the second axis 1g facing the trigger portion 5651 so that the deformation of the trigger portion 5651 of the operating member 565 is reduced, the deformation difference of the operating member 565 is transferred to an end away from the trigger portion 5651, and the stability of the contact between the trigger portion 5651 of the operating member 565 and the switch 564 is improved, thereby improving the reliability of the started traveling motor.

In some examples, the main limiting portion 567 includes a first limiting block 5671 and a second limiting block 5672, and the first limiting block 5671 is closer to the trigger portion 5651 of the operating member 565 than the second limiting block 5672. The operating member 565 is provided with a first limiting portion 5653 matching and limiting the first limiting block 5671 and a second limiting portion 5654 matching and limiting the second limiting block 5672, thereby increasing the limiting points of the operating member 565 and improving the reliability of controlling the stroke by which the operating member 565 is pressed.

The first limiting block 5671 and the second limiting block 5672 protrude from the inner sidewall of the steering wheel housing 563, and the first limiting block 5671 is higher than the second limiting block 5672. The operating member 565 is provided with the first limiting portion 5653 and the second limiting portion 5654 in contact with the end surface of the first limiting block 5671 and the end surface of the second limiting block 5672. The first limiting portion 5653 includes a first limiting surface matching the end surface of the first limiting block 5671, and the second limiting portion 5654 includes a second limiting surface matching the end surface of the second limiting block 5672. The first limiting surface and the second limiting surface form a stepped surface on the surface of the operating member 565, and the structure is simple.

In some examples, an auxiliary limiting portion 568 is further disposed on the steering wheel housing 563, the auxiliary limiting portion 568 is disposed on a side of the second axis 1g facing the reset portion 5652, and the auxiliary limiting portion 568 is configured to limit the displacement of the trigger portion 5651 when the trigger portion 5651 triggers the switch 564. The auxiliary limiting portion 568 is used in conjunction with the main limiting portion 567, thereby increasing the limiting points of the operating member 565 and improving the reliability of controlling the stroke by which the operating member 565 is pressed.

An end of the operating member 565 is disposed in the steering wheel housing 563, and the trigger portion 5651 is disposed at an end of the operating member 565. The other end of the operating member 565 extends out of the steering wheel housing 563 so that the operating member 565 can be toggled during operation. A hole is opened on the steering wheel housing 635, and the other end of the operating member 565 passes through the hole and is disposed on the outer side of the steering wheel housing 563. The hole wall of the hole is the auxiliary limiting portion 568.

In some examples, the operating member 565 includes a trigger 5657 and a toggle 5656. The trigger 5657 is rotatably connected to the steering wheel housing 563 about the second axis 1g. The trigger 5657 is rotatably connected to the steering wheel housing 563 about the second axis 1g. An end of the toggle 5656 is detachably connected to the trigger 5657, and the other end of the toggle 5656 is disposed on the outer side of the steering wheel housing 563. The trigger portion 5651 is disposed at an end of the trigger 5657 opposite to the toggle 5656. After the steering wheel assembly 56 is mounted, the toggle 5656 is set upward. When the traveling motor needs to be started, the toggle 5656 is pressed downward, and the lower hole wall of the hole on the steering wheel housing 563 is the auxiliary limiting portion 568. The operating member 565 is configured to be a two-part structure, thereby facilitating the processing of the operating member 565.

The trigger portion 5651 of the operating member 565 is configured to be a trapezoidal structure. The trigger portion 5651 is provided with a trigger surface for triggering the switch 564. A reinforced structure 5655 is disposed on a side of the trigger portion 5651 opposite to the trigger surface. The structure of the operating member 565 is improved, and the overall structural strength of the operating member 565 is increased.

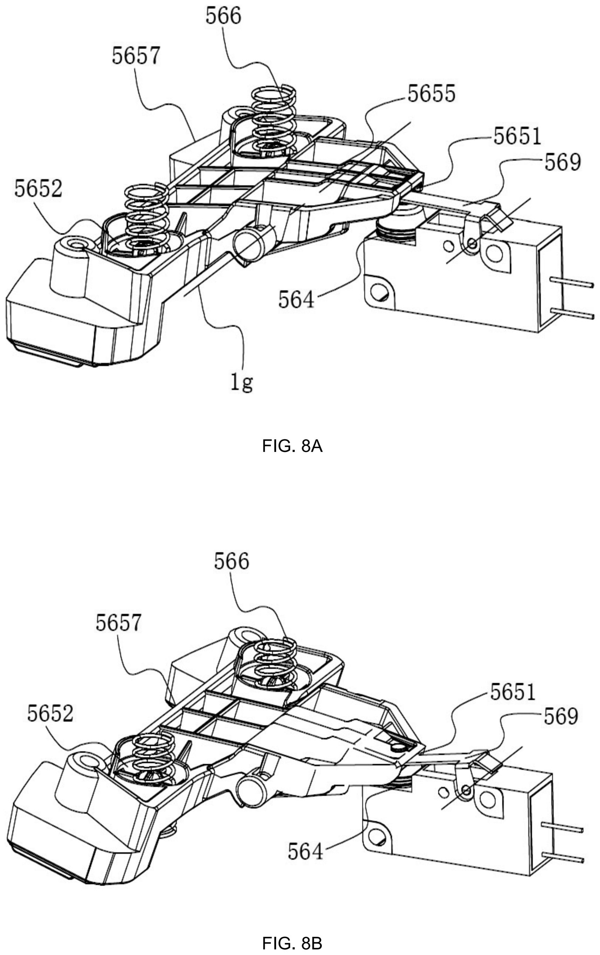

A spacer 569 is disposed between the switch 564 and the trigger portion 5651 of the operating member 565. The spacer 569 is elastic deformable to avoid wear caused by friction between the switch 564 and the operating member 565, thereby extending the service life of the operating member 565 and the switch 564. The spacer 569 is made of metal and has certain elasticity and good wear resistance. When the operating member 565 presses the switch 564, the spacer 569 also moves along with the operating member 565. FIG. 8A is a structural view illustrating that the operating member 565 does not trigger the switch 564, and FIG. 8B is a structural view illustrating that the operating member 565 triggers the switch 564. When the operating member 565 triggers the switch 564, the spacer 569 moves along with the operating member 565.

The reset elements 566 assist the operating member 565 in resetting. In some examples, at least two reset elements 566 are provided to balance the forces on the operating member 565 and reduce the local elastic pressure of a single reset element 566 on the operating member 565. The switch 564 is a micro rocker switch. In some examples, the switch 564 includes a switch using a magnet, an inductor, or a potentiometer.

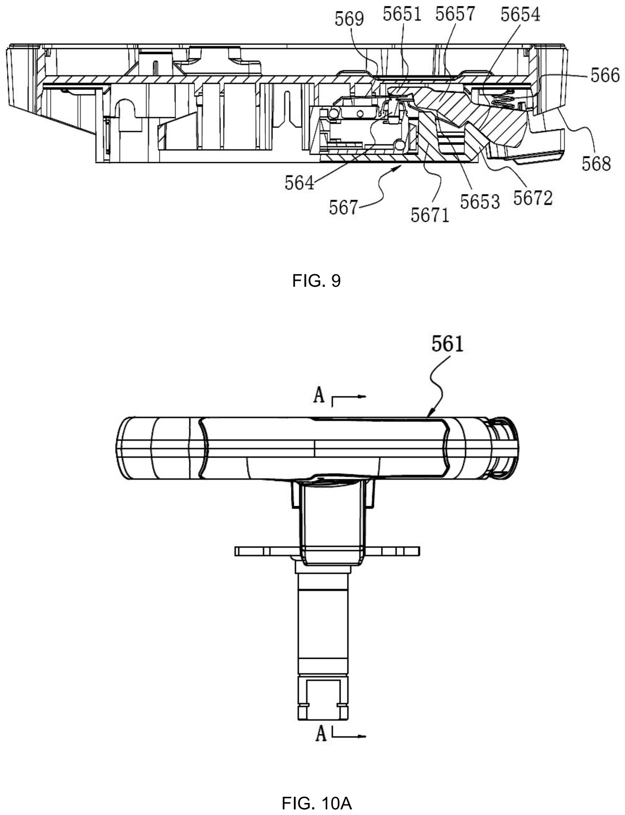

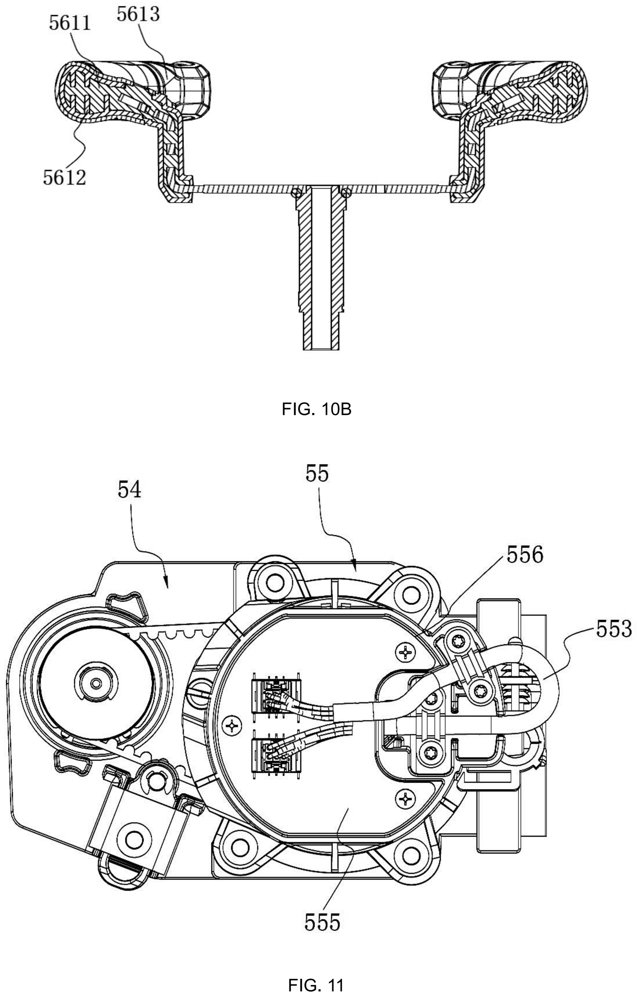

As shown in FIGS. 10A, 10B, and 11, the steering wheel 561 has three layers of structures that are a first layer structure 5611, a second layer structure 5612, and a rubber-coated structure 5613. The first layer structure 5611, the second layer structure 5612, and the rubber-coated structure 5613 are disposed in sequence from the inside to the outside. The first layer structure 5611 includes a metal insertion member and a steering wheel body made of hard rubber material connected to the metal insertion member. The steering wheel body is formed by injection moulding, and the metal insertion member is connected to the steering wheel body. The second layer structure 5612 is a layer of hard rubber injection-moulded on the outer side of the steering wheel body. The hard rubber is injection-moulded twice so that the main wall thickness of the steering wheel 561 is reduced, the cooling time is shortened, and the moulding cycle of the mould is short. Moreover, the initial shape of the steering wheel 561 is formed through the first injection moulding, and the second injection moulding strengthens the structural strength of the steering wheel body, thereby reducing the deformation of the steering wheel 561 during the production process. Finally, injection moulding is performed on the outer side of the steering wheel body injection-moulded twice to form the rubber-coated structure 5613. The soft rubber of the rubber-coated structure 5613 can improve the holding comfort of the user.

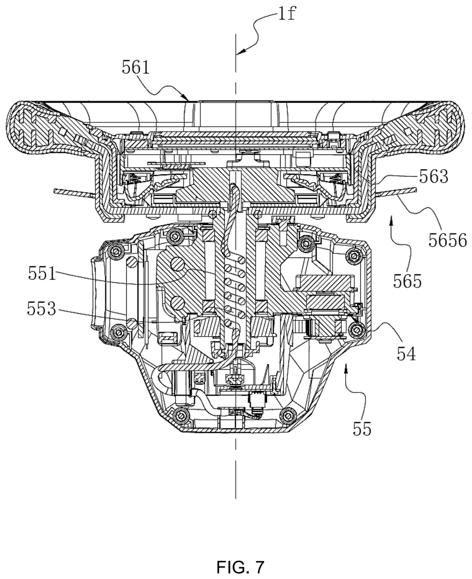

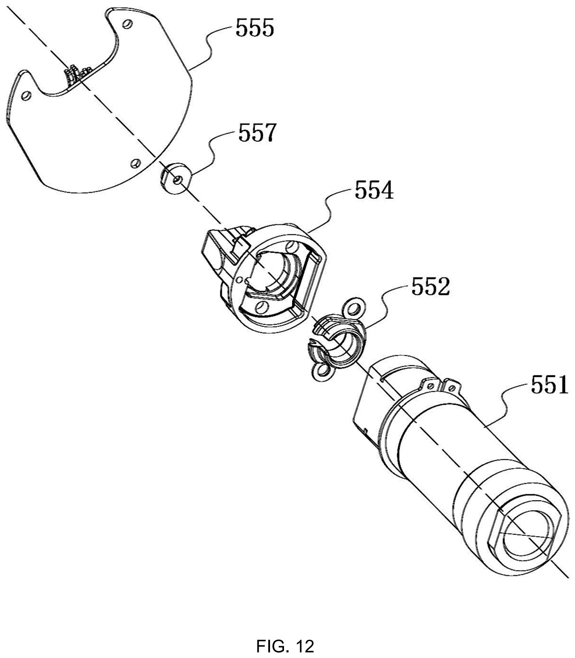

As shown in FIGS. 7, 11, 12, and 13, a steering wheel rotary assembly 55 is connected to the steering wheel assembly 56, and the steering wheel rotary assembly 55 and the steering wheel assembly 56 can rotate simultaneously. The steering wheel rotary assembly 55 includes a steering wheel rotary shaft 551, which is a hollow shaft. A wire 553 of the switch 564 of the steering wheel assembly 56 can pass through the steering wheel rotary shaft 551 and then be electrically connected to other components. When the steering wheel 561 rotates, the wire 553 is not twisted as the steering wheel 561 turns, thereby reducing the wear rate of the wire 553 and extending the service life of the wire 553.

A bushing 552 is disposed at an end of the steering wheel rotary shaft 551 facing away from the steering wheel assembly 56. An end of the bushing 552 is inserted into the end of the steering wheel rotary shaft 551, and the edge of the other end of the bushing 552 is an arc surface. The wire 553 passes through the bushing 552 and then is electrically connected to other components. The setting of the bushing 552 reduces the wear of the wire 553. The bushing 552 is fixed to the steering wheel rotary shaft 551 by bolts to prevent the bushing 552 from being separated from the steering wheel rotary shaft 551.

The bushing 552 is made of plastic, thereby further reducing the wear of the wire 553.

In some examples, the steering wheel rotary assembly 55 further includes a magnet bracket 554 mounted at an end of the steering wheel rotary shaft 551 facing away from the steering wheel assembly 56. The magnet bracket 554 is a U-shaped structure bracket, an end of the magnet bracket 554 is connected to the steering wheel rotary shaft 551, the other end of the magnet bracket 554 is used for fixing and mounting a steering wheel magnet 557, and the magnet bracket 554 can avoid the wire 553 passing through the steering wheel rotary shaft 551.

The magnet bracket 554 provides an installation carrier for the steering wheel magnet 557. To ensure the magnetism of the steering wheel magnet 557, the magnet bracket 554 is made of plastic. During processing, the metal block is placed in a processing mould and injection-moulded to form the magnet bracket 554. At this time, the metal block is embedded into the magnet bracket 554, and then the metal block is magnetized to form the steering wheel magnet 557, thereby ensuring the magnetism of the steering wheel magnet 557 and improving the strength with which the steering wheel magnet 557 is fixed.

A circuit board mounting housing 556 is disposed on a side the steering wheel magnet 557 faces. The circuit board mounting housing 556 covers an end of the steering wheel rotary shaft 551 facing away from the steering wheel assembly 56. An angle detection circuit board 555 is disposed in the circuit board mounting housing 556. An angle detection sensor is disposed on the angle detection circuit board 555. Since the steering wheel magnet 557 and the steering wheel rotary shaft 551 are coaxial, the angle detection sensor is disposed in the middle of the angle detection circuit board 555, and the structure is compact. The magnet bracket 554 is mounted on the steering wheel rotary shaft 551 and is rotatable with the steering wheel rotary shaft 551. Therefore, the steering wheel magnet 557 is also rotatable with the steering wheel rotary shaft 551, thereby improving the detection accuracy of the steering angle of the steering wheel 561.

Glue is filled into the circuit board mounting housing 556 to seal the angle detection circuit board 555. The pins and other plug connectors on the angle detection circuit board 555 are disposed on the outer side of the circuit board mounting housing 556 after being filled with glue, thereby facilitating plugging and unplugging with other connecting wires.

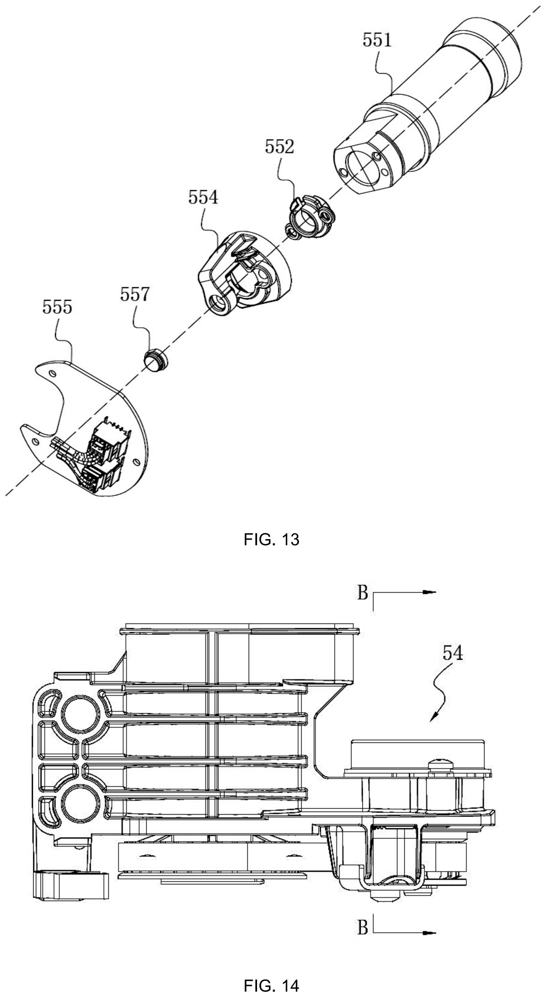

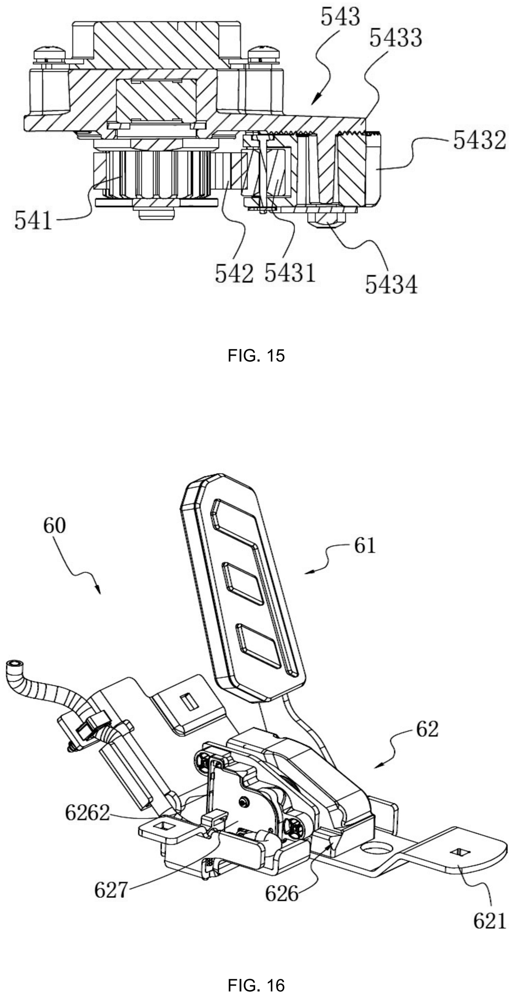

As shown in FIG. 11, the steering wheel rotary assembly 55 is connected to a steering wheel rotary damping assembly 54, and the steering wheel rotary damping assembly 54 provides resistance to the rotation of the steering wheel rotary assembly 55 to enhance the comfort of the user turning the steering wheel 561. As shown in FIGS. 14 and 15, the steering wheel rotary damping assembly 54 includes a transmission wheel 541 and a transmission belt 542. The transmission wheel 541 includes a first transmission wheel and a second transmission wheel mounted on the steering wheel rotary shaft 551. The first transmission wheel and the second transmission wheel are drivingly connected by the transmission belt 542. The first transmission wheel is a drive wheel driven by the user to rotate, and the second transmission wheel is a driven wheel.

The steering wheel rotary damping assembly 54 further includes a tensioner adjustment mechanism 543 for adjusting the tightness on the transmission belt 542 so that the rotational resistance between the first transmission wheel and the second transmission wheel can be adjusted.

In some examples, the tensioner adjustment mechanism 543 includes a tensioner pulley 5431 in contact with the transmission belt 542. The tensioner pulley 5431 is mounted onto a tensioner pulley bracket 5432, the tensioner pulley bracket 5432 is supported on a support plate 5433, and a side of the tensioner pulley bracket 5432 is in contact with the support plate 5433. The tensioner pulley bracket 5432 is movable relative to the support plate 5433, thereby adjusting the position of the tensioner pulley 5431 relative to the transmission belt 542. The tensioner pulley bracket 5432 is provided with a locking member 5434, and the locking member 5434 can fix the tensioner pulley bracket 5432 to the support plate 5433.

To improve the stability of the fixed tensioner pulley bracket 5432, first serration is disposed on the support plate 5433, and second serration meshing with the first serration is disposed on the tensioner pulley bracket 5432 so that the friction between the support plate 5433 and the tensioner pulley bracket 5432 is increased, and the locking member 5434 can stably fix the tensioner pulley bracket 5432 to the support plate 5433.

The locking member 5434 includes a pressure plate and a bolt. An elongated hole is disposed on a side of the tensioner pulley bracket 5432 facing away from the support plate 5433. The pressure plate is disposed above the elongated hole. The bolt passes through the pressure plate and the elongated hole and can abut against the support plate 5433. After the position of the tensioner pulley 5431 is adjusted, the bolt is tightened to transmit the force to the tensioner pulley bracket 5432 through the pressure plate so that the tensioner pulley bracket 5432 abuts against the support plate 5433.

As shown in FIG. 16, the body 100a of the vehicle-type driving device 100 further includes an accelerator module 60, and the accelerator module 60 includes a pedal assembly 61 and an accelerator assembly 62. The user steps on the pedal assembly 61 to control the accelerator assembly 62 to control the amount of power or fuel supplied to the vehicle-type driving device 100, thereby controlling the traveling speed of the vehicle-type driving device 100.

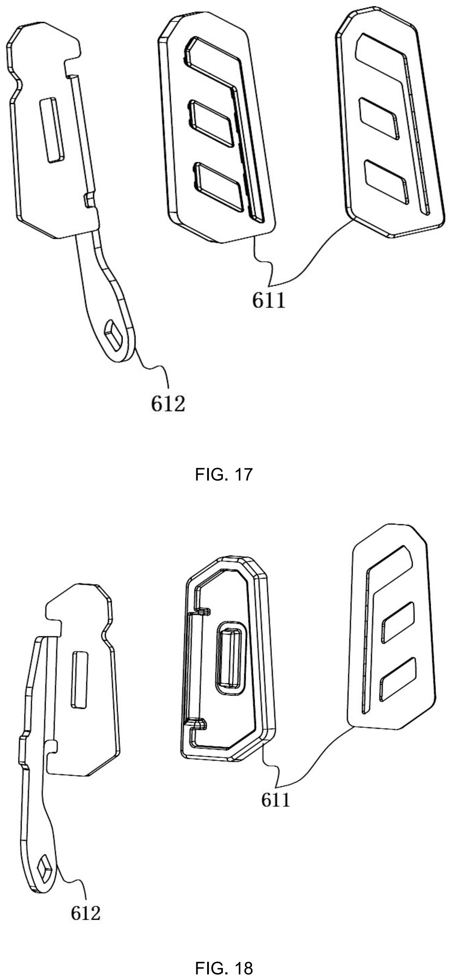

As shown in FIGS. 17 and 18, the pedal assembly 61 includes a pedal body 611 and a pedal bracket 612. The pedal bracket 612 is a metal part, and an end of the pedal bracket 612 is connected to the accelerator assembly 62. The pedal body 611 is a rubber part, and the pedal body 611 is used for the driver to step on. The other end of the pedal bracket 612 is provided with a mounting groove, the pedal body 611 is disposed in the mounting groove, and the pedal body 611 is connected to the mounting groove through the structure of a plug-in groove and a plug-in block. The connection structure is simple so that it is convenient to assemble the pedal body 611 on the pedal bracket 612.

As shown in FIG. 16, the accelerator assembly 62 includes a fixing bracket 621 which serves as an installation carrier. Other components of the accelerator assembly 62 are all disposed on the fixing bracket 621 so that a modular arrangement of the accelerator module 60 is achieved, and the accelerator module 60 can be removed or mounted as a whole.

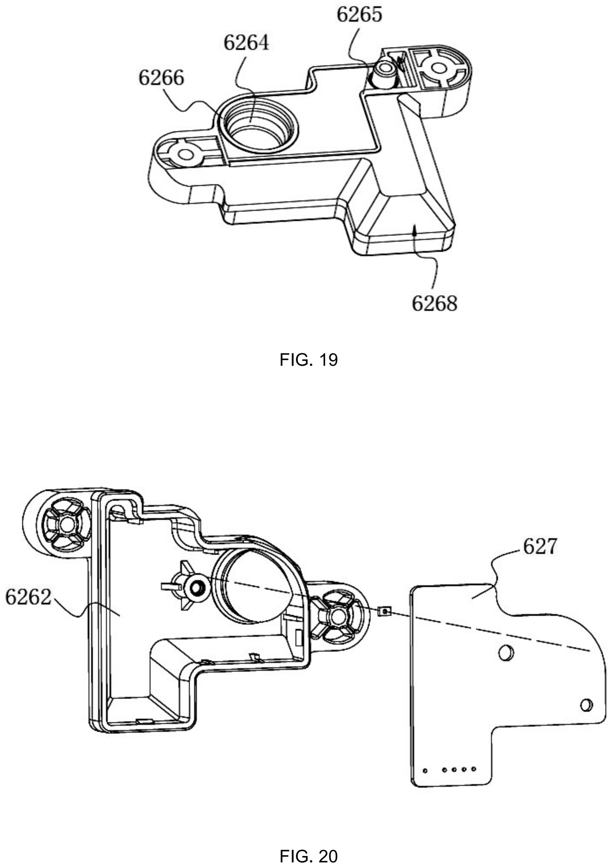

As shown in FIGS. 19 to 21, an accelerator housing 626 is disposed on the fixing bracket 621, and a mounting cavity 6263 and a pedal circuit board mounting cavity 6262 are disposed in the accelerator housing 626. A main shaft 622 is rotatably disposed in the mounting cavity 6263. The main shaft 622 is rotatably connected to the fixing bracket 621, and an end of the main shaft 622 extends out of the accelerator housing 626 and is fixedly connected to the pedal bracket 612. When the pedal body 611 is stepped on, the pedal bracket 612 drives the main shaft 622 to rotate.

The accelerator housing 626 includes a dustproof box 6267 and a pedal circuit board mounting box 6268 disposed on a side of the dustproof box 6267. The pedal circuit board mounting box 6268 is mounted on the fixing bracket 621. The pedal circuit board mounting box 6268 has the pedal circuit board mounting cavity 6262 for mounting a pedal circuit board 627. An opening is provided on a side of the pedal circuit board mounting box 6268 facing away from the dustproof box 6267 to facilitate the installation of the pedal circuit board 627. The dustproof box 6267 includes an upper dustproof box and a lower dustproof box that are detachably connected. The lower dustproof box is mounted on the fixing bracket 621, and the upper dustproof box and the lower dustproof box are buckled to form the mounting cavity 6263, which has the sealing and dustproof performances.

The pedal circuit board 627 is mounted in the pedal circuit board mounting box 6268. Glue is filled into the pedal circuit board mounting cavity 6262 to seal the opening of the pedal circuit board mounting box 6268 so that the waterproof performance is ensured. No dust is accumulated at a pedal magnet 628, thereby avoiding the failure of the angle detection sensor.

A circular cavity 6264 is disposed on the pedal circuit board mounting box 6268, and the circular cavity 6264 connects the mounting cavity 6263 to the pedal circuit board mounting cavity 6262. The other end of the main shaft 622 extends out of the dustproof box 6267 through the circular cavity 6264, and the end of the main shaft 622 is disposed in the circular cavity 6264. The pedal magnet 628 is disposed at the end of the main shaft 622, and the pedal magnet 628 is disposed in the circular cavity 6264. The pedal circuit board 627 is disposed in the pedal circuit board mounting cavity 6262. The angle detection sensor is disposed at the position of the pedal circuit board 627 corresponding to the pedal magnet 628 and is configured to acquire the angle of rotation of the main shaft 622 and then acquire the opening degree of the pedal assembly 61.

To improve the sealing performance of the connection between the pedal circuit board mounting box 6268 and the dustproof box 6267, a first sealing rib 6265 circumferentially protrudes on a side of the pedal circuit board mounting box 6268 facing away from the opening, and the first sealing rib 6265 is in contact with the surface of the dustproof box 6267, thereby improving the sealing and dustproof performance of the pedal circuit board mounting box 6268.

A second sealing rib 6266 circumferentially protrudes at an end of the circular cavity 6264 facing the dustproof box 6267, and the second sealing rib 6266 is in contact with the surface of the dustproof box 6267, thereby preventing dust and other impurities from entering the circular cavity 6264 and affecting the detection accuracy of the angle detection sensor and improving the sealing and dustproof performance of the pedal circuit board mounting box 6268.

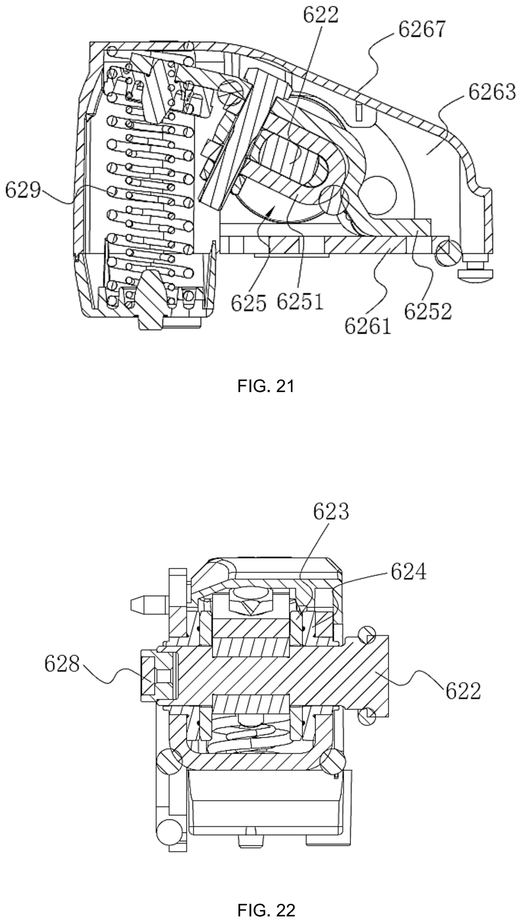

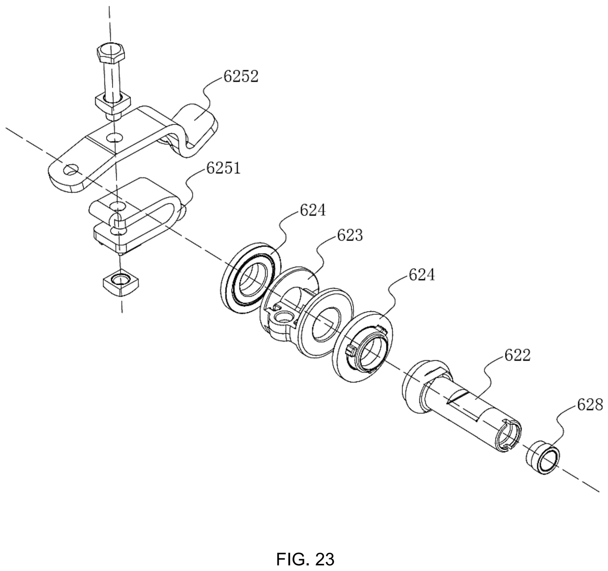

As shown in FIGS. 21, 22, and 23, a main shaft bracket 623 is further disposed in the dustproof box, and the main shaft bracket 623 is mounted on the main shaft 622. The main shaft bracket 623 includes two annular parts that are opposite to each other and in parallel. The two annular parts are partially connected by a connector to form a space for the main shaft 622 to pass through. The other end of the main shaft 622 passes through the two annular parts of the main shaft bracket 623 and the dustproof box and is disposed in the pedal circuit board mounting cavity 6262.

Further, main shaft bushings 624 are disposed at two opposite ends of the main shaft bracket 623, respectively. The main shaft bushings 624 fit the annular parts of the main shaft bracket 623, and the main shaft bushings 624 are sleeved on the main shaft 622. The main shaft bushings 624 reduce the radial and axial movement of the main shaft 622 and improve the accuracy of the signal received by the angle sensor.

The main shaft 622 is further connected to a rotary bracket 625 mounted on the main shaft 622 between the two annular parts. The rotary bracket 625 includes a U-shaped bracket 6251 and a limiting bracket 6252. The main shaft 622 is disposed in a U-shaped groove of the U-shaped bracket 6251. The limiting bracket 6252 is an S-shaped bracket. An end of the limiting bracket 6252 fits and is connected to a side of the U-shaped bracket 6251, and the other end of the limiting bracket 6252 is used for being in contact with a pedal limiting portion 6261 on the fixing bracket 621. The U-shaped bracket 6251 and the limiting bracket 6252 are rotatable with the main shaft 622. The pedal limiting portion 6261 limits the rotation range of the main shaft 622.

An end of the limiting bracket 6252 is connected to a pedal elastic member 629, and the pedal elastic member 629 always has a tendency to reset the main shaft 622 and thus reset the pedal assembly 61. When the pedal assembly 61 is not subjected to a pedaling force, the pedal elastic member 629 assists the main shaft 622 in resetting, and at the same time, the pedal limiting portion 6261 limits the position where the main shaft 622 is reset.

In some examples, two pedal elastic members 629 are provided. When one pedal elastic member 629 loses the elastic force, the other pedal elastic member 629 can still play a resetting role, thereby avoiding the following risk: one pedal elastic member 629 is damaged and the pedal assembly 61 immediately fails in resetting.

The pedal elastic member 629 is a spring. If two springs are provided, the two springs may be coaxial with one spring being disposed inside the other spring.

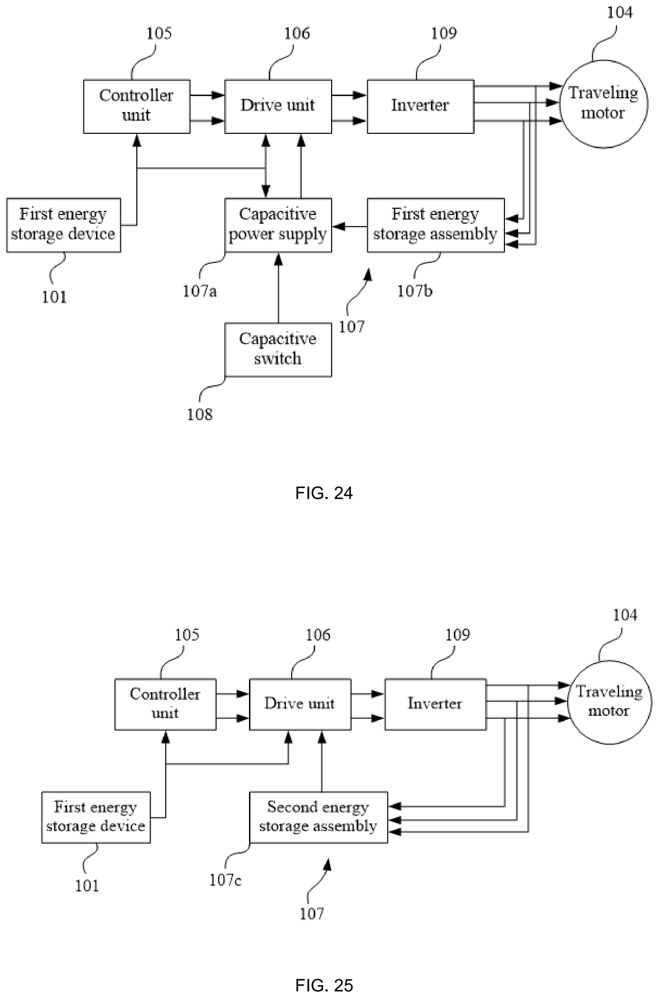

As shown in FIGS. 24 and 25, when the vehicle-type driving device 100 is parked on a slope for a long time in a parking mode through the power supply assembly 96, the power supply assembly 96 continues supplying power until the power supply assembly 96 is completely discharged or the power is too low, causing the vehicle-type driving device 100 to be powered off. If a brake pedal is not stepped on to a preset position, the traveling wheels are movable freely, and the vehicle-type driving device 100 coasts. In some examples, to solve the preceding technical problem, the vehicle-type driving device 100 is provided with a first energy storage device 101 and a second energy storage device 107. The traveling assembly 93 includes multiple traveling wheels. For example, the multiple traveling wheels are a first left traveling wheel, a second left traveling wheel, a first right traveling wheel, and a second right traveling wheel, respectively. A traveling motor 104 drives the traveling assembly 93 to provide power for the vehicle-type driving device 100 to travel. The first energy storage device 101 is configured to supply power to at least the traveling motor 104 so that the traveling motor 104 drives the traveling assembly 93 to operate, and the second energy storage device 107 is configured to, when the power of the first energy storage device 101 is less than a preset value and/or when an electrical energy transmission path from the first energy storage device 101 to the traveling motor 104 fails or is cut off, serve as an electric power source to control the traveling motor 104 to enter the parking mode.

The first energy storage device 101 in the vehicle-type driving device 100 can supply power to the traveling motor 104 so that the traveling motor 104 drives the traveling assembly 93 to operate, and the first energy storage device 101 in the vehicle-type driving device 100 can serve as an electric power source to control the traveling motor 104 to enter the parking mode. When the power of the first energy storage device 101 is greater than or equal to the preset value, the first energy storage device 101 serves as the electric power source so that a drive control unit controls the traveling motor 104 to enter the parking mode. When the power of the first energy storage device 101 is less than the preset value and the first energy storage device 101 cannot control the traveling motor 104 to enter the parking mode and/or when the electrical energy transmission path from the first energy storage device 101 to the traveling motor 104 fails or is cut off, the second energy storage device 107 serves as the electric power source to control the traveling motor 104 to enter the parking mode so that the vehicle-type driving device 100 can be in the parking mode for a long time. Failures occurring on the electrical energy transmission path from the first energy storage device 101 to the traveling motor 104 include cell damage, battery management system damage, temperature faults, insulation faults, blown fuses, and the like. Failures occurring on the electrical energy transmission path may result in low power, sudden power loss, or electrical disconnects within a power supply system. When the first energy storage device 101 and the vehicle-type driving device 100 are electrically disconnected, the electrical energy transmission path from the first energy storage device 101 to the traveling motor 104 is cut off. In this manner, the second energy storage device 107 is provided so that the problem that the vehicle-type driving device 100 coasts in the event of the complete power failure, sudden power loss, or low power of the power supply system is solved, thereby improving safety.

In some examples, the vehicle-type driving device 100 further includes a control device 103, the control device 103 includes a controller unit 105 and a drive control unit, and the controller unit 105 can control the drive control unit so that the traveling motor 104 drives the traveling assembly 93 to operate.

The controller unit 105 includes a controller and some related circuits. The circuit structure of the controller unit 105 is the related art and thus is not specifically limited here.

The drive control unit includes a switching element and a drive unit 106. The switching element is powered and triggered to control the traveling motor 104 to enter the parking mode. The drive unit 106 includes a relay and some related circuits, and the circuit structure is the related art and thus is not specifically limited here.

The switching element includes an inverter 109. When the first energy storage device 101 has power, the first energy storage device 101 serves as the electric power source so that the drive control unit controls the traveling motor 104 to enter the parking mode. The relay of the drive control unit is closed, and the controller operates to control the inverter 109 to operate to achieve electronic parking.

When the first energy storage device 101 is out of power, the second energy storage device 107 serves as the electric power source so that the drive control unit controls the traveling motor 104 to enter the parking mode. Three phases of the traveling motor 104 are short-circuited so that the traveling motor 104 enters the parking mode.

The controller stops working, the relay of the drive unit 106 is open, and the second energy storage device 107 supplies power to the drive unit so that the lower-bridge metal-oxide-semiconductor field-effect transistor (MOSFET) of the inverter 109 is turned on, and the phase lines of the traveling motor 104 are short-circuited to form a braking force.

In some examples, as shown in FIG. 24, the second energy storage device 107 includes a capacitive power supply 107a. When the power of the first energy storage device 101 is greater than the preset value, the first energy storage device 101 can charge the capacitive power supply 107a. When the power of the first energy storage device 101 is less than the preset value, the capacitive power supply 107a serves as the electric power source so that the drive unit controls the traveling motor 104 to enter the parking mode. In this manner, the problem that the vehicle-type driving device coasts in the event of the complete power failure of the control system is solved.

The second energy storage device 107 further includes a first energy storage assembly 107b, where when the traveling assembly 93 coasts, the back electromotive force generated by the traveling motor 104 charges the first energy storage assembly 107b, and the first energy storage assembly 107b charges the capacitive power supply 107a when the power of the capacitive power supply 107a is less than a preset power value. The first energy storage assembly 107b is provided. In this manner, when the power of the capacitive power supply 107a is insufficient to turn on the lower-bridge MOSFET of the inverter 109, the traveling motor 104 cannot be braked, the vehicle-type driving device 100 slides, and the traveling motor 104 starts to rotate; the back electromotive force generated by the rotation of the traveling motor 104 can charge the first energy storage assembly 107b; when the stored power of the first energy storage assembly 107b reaches a set value, the first energy storage assembly 107b starts to charge the capacitive power supply 107a. When the power of the capacitive power supply 107a reaches the preset value, the lower-bridge MOSFET of the inverter 109 is turned on again so that the phase lines of the traveling motor 104 are short-circuited to form the braking force to park the vehicle-type driving device 100. The vehicle-type driving device 100 includes a capacitive switch 108 configured to disconnect or connect the capacitive power supply 107a. The first energy storage device 101 includes a battery pack. When the user removes the battery pack from the vehicle-type driving device 100, the battery pack is electrically disconnected from the vehicle-type driving device 100, and the user may manually operate the capacitive switch 108 to disconnect the capacitive power supply 107a so that the capacitive power supply 107a is discharged. In some examples, the capacitive switch 108 automatically controls the capacitive power supply 107a to be disconnected and discharged. In this manner, the traveling motor 104 exits the state in which the three phases of the traveling motor 104 are short-circuited, and the user can push the vehicle-type driving device 100 when the battery pack is removed, which is convenient for operation. When the user places the battery pack into the vehicle-type driving device 100, the battery pack is electrically connected to the vehicle-type driving device 100, and the user may manually operate the capacitive switch 108 to connect the capacitive power supply 107a. In some examples, the capacitive switch 108 automatically controls the capacitive power supply 107a to be connected. In this manner, after the battery pack is put back into the vehicle-type driving device 100, when the power of the first energy storage device 101 is less than the preset value, and/or when the electrical energy transmission path from the first energy storage device 101 to the traveling motor 104 fails or is cut off, the second energy storage device 107 can serve as the electric power source to control the traveling motor 104 to enter the parking mode, thereby improving safety.

In some examples, as shown in FIG. 25, the second energy storage device 107 includes a second energy storage assembly 107c. When the power of the first energy storage device 107 is less than the preset value and/or when the electrical energy transmission path from the first energy storage device 101 to the traveling motor 104 fails or is cut off, the second energy storage assembly 107c serves as the electric power source so that the drive unit controls the traveling motor 104 to enter the parking mode. The second energy storage assembly 107c supplies power to the drive unit so that the lower-bridge MOSFET of the inverter 109 is turned on, and the phase lines of the traveling motor 104 are short-circuited to form the braking force.

The preceding parking mode is a mode in which the traveling motor 104 slows down or stops. When the traveling motor 104 slows down, the vehicle-type driving device 100 slides continuously or discontinuously at a very low speed and does not slide down the slope to a large extent, thereby improving safety.

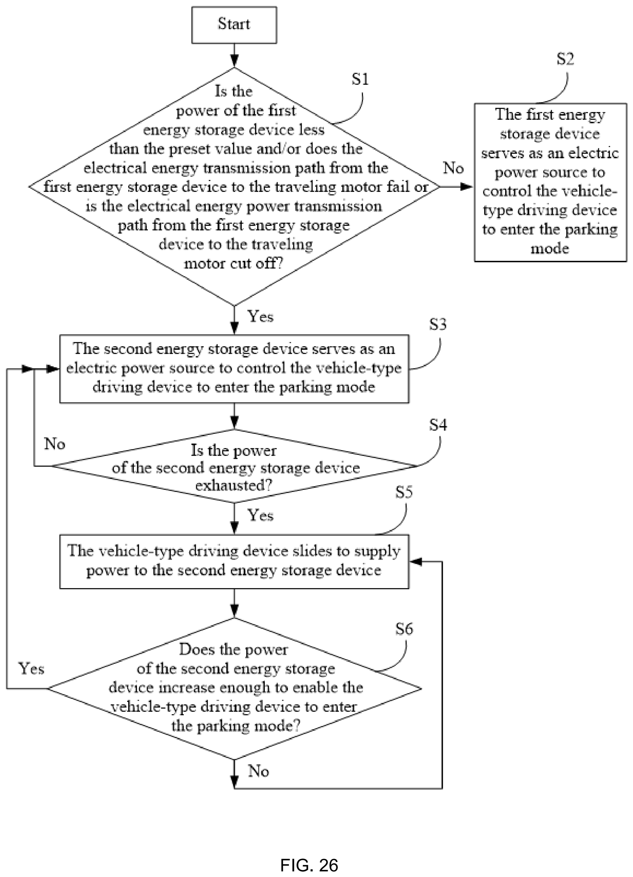

As shown in FIG. 26, in step S1, a detection device 102 determines whether the power of the first energy storage device 107 is less than the preset value and/or whether the electrical energy transmission path from the first energy storage device 101 to the traveling motor 104 fails or is cut off. In step S2, when the power of the first energy storage device 107 is greater than the preset value and/or when the electrical energy transmission path from the first energy storage device 101 to the traveling motor 104 does not fail or is not cut off, the first energy storage device 101 serves as an electric power source to control the vehicle-type driving device 100 to enter the parking mode. In step S3, when the power of the first energy storage device 107 is less than or equal to the preset value and/or when the electrical energy transmission path from the first energy storage device 101 to the traveling motor 104 fails or is cut off, the second energy storage device 107 serves as an electric power source to control the vehicle-type driving device 100 to enter the parking mode. In step S4, the detection device 102 determines whether the power of the second energy storage device 107 is exhausted, or determines whether the power of the second energy storage device 107 is less than or equal to the preset value, or determines whether the voltage of the second energy storage device 107 is less than or equal to the preset value. If the determination result is no, the second energy storage device 107 continues serving as the electric power source to control the vehicle-type driving device 100 to enter the parking mode. If the determination result is yes, in step S5, when the power of the second energy storage device 107 is exhausted, or when the power of the second energy storage device 107 is less than or equal to the preset value, or when the voltage of the second energy storage device 107 is less than or equal to the preset value, the vehicle-type driving device 100 slides on the slope to supply power to the second energy storage device 107. In step S6, the detection device 102 determines whether the power or voltage of the second energy storage device 107 increases enough to enable the vehicle-type driving device 100 to enter the parking mode. If the determination result is no, the vehicle-type driving device 100 continues sliding on the slope to supply power to the second energy storage device 107. If the determination result is yes, the second energy storage device 107 serves as the electric power source to control the vehicle-type driving device 100 to enter the parking mode.

The specific structures of the first energy storage device 101, the first energy storage assembly 107b, and the second energy storage assembly 107c mentioned above are the related arts, and the details are not repeated here.

The vehicle-type driving device 100 is the riding mower, the mower has the cutting assembly 10, and the chassis 91 supports the cutting assembly 10. The cutting assembly 10 includes the mowing elements 12 for mowing grass, and the cutting motors 13 are configured to drive the cutting assembly 10. When the mower is used for a long time, the mowing elements 12 are prone to loosening, so it is necessary to detect whether the mowing elements 12 are abnormal before the cutting assembly 10 operates.

To ensure that whether the cutting assembly 10 has a working abnormality can be accurately determined even when the cutting assembly 10 operates at a low speed, in some examples, the detection device 102 is configured to detect a first operating parameter and a second operating parameter of the cutting motor 13. The control device 103 is used for controlling the cutting motor 13 to stop or slow down when the first operating parameter is within a first threshold range, the second operating parameter is within a second threshold range, and the duration that the first operating parameter is within the first threshold range and the second operating parameter is within the second threshold range is a first preset time. The second operating parameter is different from the first operating parameter, and the second operating parameter includes at least the rotational speed of the cutting motor 13.

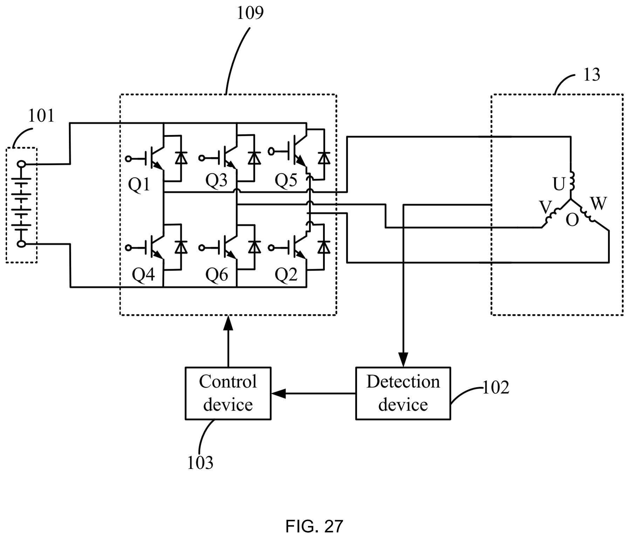

As shown in FIG. 27, the detection device 102 acquires the first operating parameter and the second operating parameter of the cutting motor 13, and the second operating parameter includes at least the rotational speed of the cutting motor 13. When the first operating parameter is within the first threshold range and the second operating parameter is within the second threshold range, the cutting motor 13 stops or slows down. The rotational speed of the cutting motor 13 is used as one of the conditions for determining whether the cutting assembly 10 fails, thereby avoiding the problem that the cutting motor 13 operates at a low speed, and the cutting assembly 10 is easily misjudged as abnormal due to too small a working current of the cutting motor 13. The present application improves the accuracy of determining whether the cutting assembly 10 works normally, thereby improving the usage safety of the mower.

In some examples, the control device 103 controls the cutting motor 13 to stop in a second preset time. The second preset time is greater than the first preset time. The second preset time provides the buffer time for the shutdown of the cutting motor 13 to avoid the impact of the sudden shutdown on the cutting motor 13.

The second preset time is greater than 1s, thereby ensuring that the cutting motor 13 is controlled to slow down within a certain period of time until the cutting motor 13 stops without causing damage to the surrounding environment or the operator.

In some examples, the second operating parameter includes the actual rotational speed and the target rotational speed of an electric motor, and the second threshold range includes an actual rotational speed range and a target rotational speed range of the electric motor. When the actual rotational speed of the cutting motor 13 is within the actual rotational speed range of the electric motor for the first preset time, the target rotational speed of the cutting motor 13 is within the target rotational speed range of the electric motor for the first preset time, and the first operating parameter is within the first threshold range for the first preset time, it indicates that the cutting assembly 10 fails, and the control device 103 controls the cutting motor 13 to stop or slow down, thereby ensuring the safety of the mower during operation.

The preceding first operating parameter includes the bus current. When the bus current is relatively small, whether the cutting assembly fails is reflected through the actual rotational speed and the target rotational speed of the electric motor.

If the first operating parameter includes the bus current, the first threshold range is (0 A, 3 A]. The actual rotational speed range of the electric motor is greater than or equal to 500 r/min, and the target rotational speed range of the electric motor is greater than or equal to 1950 r/min.

In some examples, the second operating parameter includes the actual rotational speed and the target rotational speed of an electric motor, and the second threshold range includes an actual rotational speed range and a target rotational speed range of the electric motor. When the actual rotational speed of the cutting motor 13 is within the actual rotational speed range of the electric motor for the first preset time, the target rotational speed of the cutting motor 13 is within the target rotational speed range of the electric motor for the first preset time, and the first operating parameter is within the first threshold range for the first preset time, it indicates that the cutting assembly 10 fails, and the control device 103 controls the cutting motor 13 to stop or slow down, thereby ensuring the safety of the mower during operation.

The preceding first operating parameter includes the phase current. When the phase current is relatively small, whether the cutting assembly 10 fails is reflected through the actual rotational speed of the cutting motor 13 and the target rotational speed of the cutting motor 13.

If the first operating parameter includes the phase current, the first threshold range is (0 A, 4 A]. The actual rotational speed range of the electric motor is greater than or equal to 500 r/min, and the target rotational speed range of the electric motor is greater than or equal to 1950 r/min.

The mower further includes a display screen, a switch panel, and a battery management system. Before the control device 103 controls the cutting motor 13 to start, whether the traveling motor 104 for driving the traveling assembly 93 to operate, the display screen, the switch panel, and the battery management system communicate normally with the control device 103 separately is determined; and if so, the cutting motor 13 starts. **If** any one of the traveling motor 104 for driving the traveling assembly 93 to operate, the display screen, the switch panel, and the battery management system communicates abnormally with the control device 103, the cutting motor 13 cannot start, thereby ensuring the safety of the mower during operation.

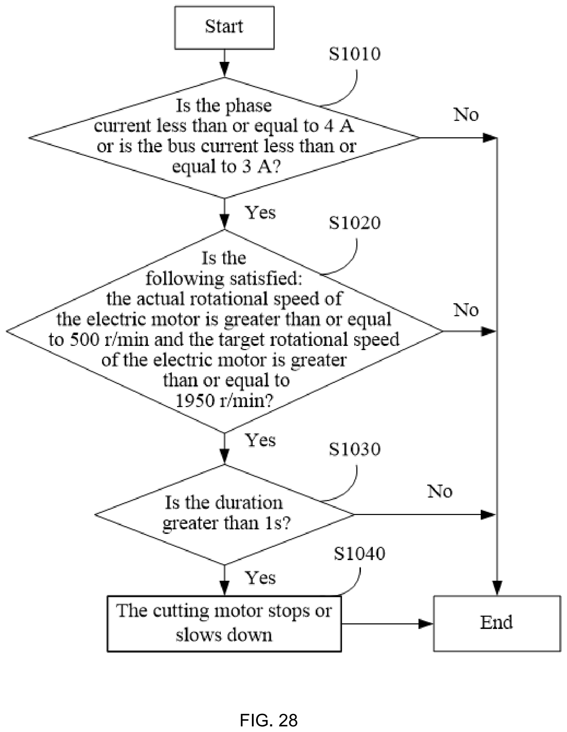

As shown in FIG. 28, in step S1010, the detection device 102 detects whether the phase current is less than or equal to 4 A or whether the bus current is less than or equal to 3 A. **If** the determination result is no, the determination ends. **If** the determination result is yes, in step S1020, the detection device 102 detects whether the actual rotational speed of the electric motor is greater than or equal to 500 r/min and the target rotational speed of the electric motor is greater than or equal to 1950 r/min. **If** the determination result is no, the determination ends. **If** the determination result is yes, in step S1030, the detection device 102 detects whether the duration that the first operating parameter is within the first threshold range and the second operating parameter is within the second threshold range is greater than 1s. **If** the determination result is no, the determination ends. **If** the determination result is yes, in step S1040, the control device 103 controls the cutting motor 13 to stop or slow down.

The preceding switch panel is a control panel for controlling the start and stop of the mower, and the structure of the switch panel is the related art and is not specifically limited here. The communication connection between the traveling motor 104, the display screen, the switch panel, and the battery management system and the control device 103 is the related art and is not specifically limited here.

In some examples, if the mower enters a cruise mode, the cutting assembly 10 does not perform a mowing operation. When the mower is in the cruise mode, the rotational speed of the traveling motor 104 driving the traveling assembly 93 to operate is relatively high. If the rotational speed of the traveling motor 104 is greater than a preset rotational speed value, the cutting motor 13 stops, thereby ensuring the safety of the operating environment.

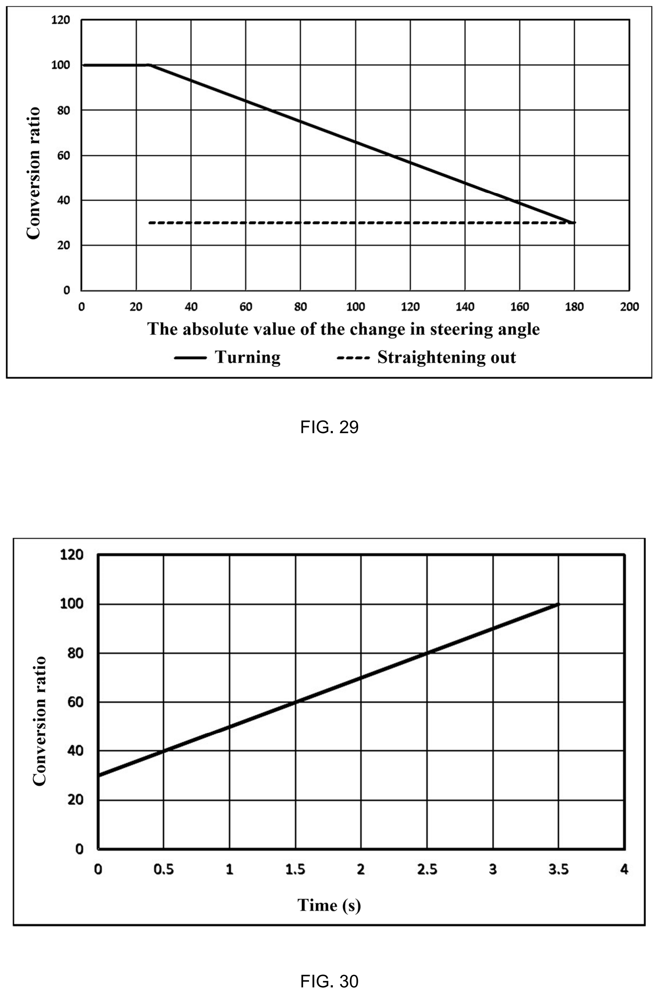

The vehicle-type driving device 100 usually decelerates during turning. To improve the stability of the speed reduction of the vehicle-type driving device 100 during turning and the driving safety of the vehicle-type driving device 100, in some examples, the performance of the vehicle-type driving device 100 decelerating during turning is improved, thereby improving the user experience. As shown in FIGS. 29 and 30, the vehicle-type driving device 100 includes a speed setting device and the traveling motor 104. The speed setting device is used for the user to set the traveling speed of the vehicle-type driving device 100. The traveling speed set by the speed setting device is defined as the input speed. The traveling motor 104 drives the vehicle-type driving device 100 to travel at the target speed, where the target speed is the actual traveling speed of the vehicle-type driving device 100. The ratio of the target speed to the input speed is defined as the conversion ratio. The control device 103 can set the conversion ratio according to the steering angle of the steering wheel 561. During a steering process of the vehicle-type driving device 100, in the case where the steering angle of the steering wheel 561 is within a preset range, when the steering wheel 561 has a first steering angle, the control device 103 sets the conversion ratio to a first steering conversion ratio; and when the steering wheel 561 has a second steering angle, the control device 103 sets the conversion ratio to a second steering conversion ratio, where the second steering conversion ratio is different from the first steering conversion ratio. The preset range may be an open interval or a half-open interval.

This driving method may be applied to the cruise mode of the vehicle-type driving device 100 and, of course, may be applied to other driving modes, which is not specifically limited here. The conversion ratio is obtained using the target speed and the input speed. Different steering angles of the steering wheel 561 correspond to different conversion ratios. The conversion ratio is acquired according to the steering angle of the steering wheel 561, and then the target speed of the vehicle-type driving device 100 is adjusted according to the conversion ratio so that the traveling speed of the vehicle-type driving device 100 can steadily decrease during turning, and the driver does not feel a shock due to the sudden decrease or increase in speed, thereby improving the driving safety and the user experience of the vehicle-type driving device 100.

The vehicle-type driving device 100 includes a steering process and a straightening-out process. The steering process includes a first steering stage and a second steering stage. The steering angle in the first steering stage is the first steering angle, and the steering angle in the second steering stage is the second steering angle. The first steering conversion ratio remains unchanged when the vehicle-type driving device 100 is in the first steering stage. The second steering conversion ratio changes linearly when the vehicle-type driving device 100 is in the second steering stage. The vehicle-type driving device 100 can set different conversion ratios according to the steering angles so that the traveling speed of the vehicle-type driving device 100 is adjusted, thereby improving the driving safety and the user experience of the vehicle-type driving device 100.

In some examples, when the first steering angle is greater than or equal to 0° and less than or equal to 25°, the first steering conversion ratio is 100%. When the vehicle-type driving device 100 turns within the range of the first steering angle, the first steering conversion ratio is a fixed value.

In some examples, the second steering angle is greater than 25° and less than or equal to 180°. Within the angle range, the second steering ratio in the second steering stage changes linearly, where the linear equation is y = -0.4516x + 111.3, x denotes the second steering angle, and y denotes the second steering conversion ratio. The greater the steering angle of the vehicle-type driving device 100, the smaller the conversion ratio, and the smaller the target speed. The vehicle-type driving device 100 adjusts the speed to the target speed, thereby achieving the deceleration of the vehicle-type driving device 100.

The steering wheel 561 is capable of controlling the vehicle-type driving device 100 to straighten out, and a direction in which the vehicle-type driving device 100 straightens out is opposite to a direction in which the vehicle-type driving device 100 steers.

To avoid the overshooting of the vehicle-type driving device 100 during straightening out, before the vehicle-type driving device 100 straightens out, the minimum speed of the vehicle-type driving device 100 during the steering process is acquired, where the minimum speed is set to the initial target speed of the vehicle-type driving device 100 during the straightening-out process.

As shown in FIGS. 29 and 30, during the straightening-out process of the vehicle-type driving device 100, when the steering wheel 561 has a first straightening-out angle, the control device 103 sets the conversion ratio to a first straightening-out conversion ratio; and when the steering wheel 561 has a second straightening-out angle, the control device 103 sets the conversion ratio to a second straightening-out conversion ratio, where the second straightening-out conversion ratio is different from the first straightening-out conversion ratio. The vehicle-type driving device 100 can set different conversion ratios according to the straightening-out angles so that the traveling speed of the vehicle-type driving device 100 is adjusted, thereby improving the driving safety and the user experience of the vehicle-type driving device 100.

The straightening-out process of the vehicle-type driving device 100 includes a first straightening-out stage and a second straightening-out stage, where a straightening-out angle in the first straightening-out stage is the first straightening-out angle, a straightening-out angle in the second straightening-out stage is the second straightening-out angle, the first straightening-out conversion ratio remains unchanged when the vehicle-type driving device 100 is in the first straightening-out stage, and the second straightening-out conversion ratio changes linearly when the vehicle-type driving device 100 is in the second straightening-out stage.

It is to be understood that the vehicle-type driving device 100 is in the first straightening-out stage, the angle of rotation of the steering wheel 561 is relatively large, and the conversion ratio remains unchanged. The vehicle-type driving device 100 travels at the minimum speed during turning in the first straightening-out stage to avoid the problem of overshooting during turning, thereby improving the driving comfort and safety of the driver. As the angle of rotation of the steering wheel 561 gradually decreases, the conversion ratio may be increased, thereby increasing the traveling speed of the vehicle-type driving device 100 to improve the working efficiency of the vehicle-type driving device 100.

In some examples, when the first straightening-out angle is greater than or equal to 25° and less than or equal to 180°, the first straightening-out conversion ratio is 30%. In some examples, when the second straightening-out angle is greater than or equal to 0° and less than or equal to 25°, the second straightening-out conversion ratio changes from 30% to 100% within a preset time. The preset time is 3.5s. Under the premise that the driving safety is not affected in the second stage of straightening out, the vehicle-type driving device 100 accelerates to the set traveling speed within 3.5s.

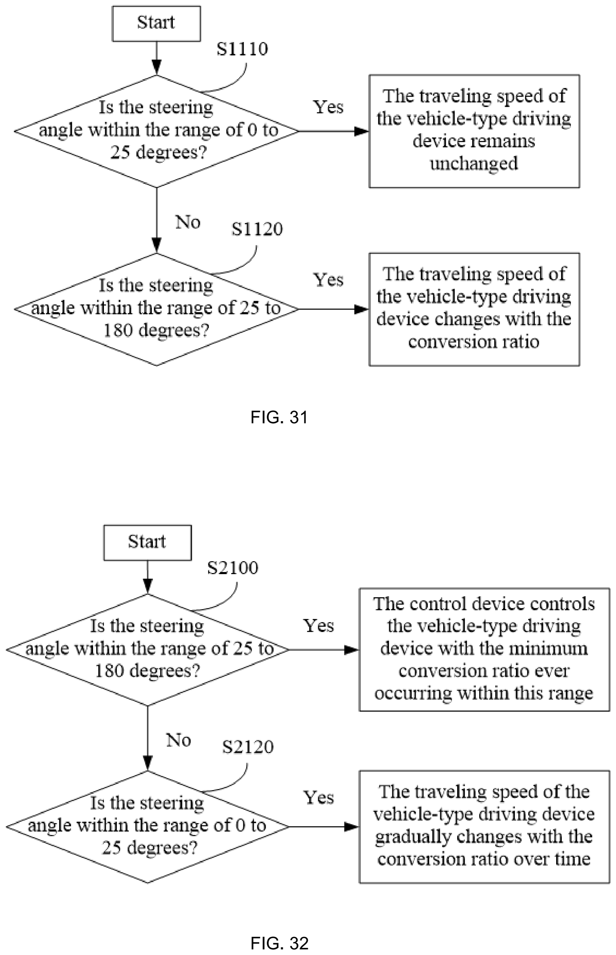

As shown in FIG. 31, during the steering process, in step S1110, when the steering angle is greater than or equal to 0° and less than or equal to 25°, the traveling speed of the vehicle-type driving device 100 remains unchanged. In step S1120, when the steering angle is greater than or equal to 25° and less than or equal to 180°, the traveling speed of the vehicle-type driving device 100 changes with the linearly changing conversion ratio. It is to be understood that during the steering process, when the steering angle is 180°, the conversion ratio is the minimum during the steering process, and the traveling speed of the vehicle-type driving device 100 is the lowest.

As shown in FIG. 32, during the straightening-out process, in step S2100, when the steering angle is greater than or equal to 25° and less than or equal to 180°, the control device 103 controls the vehicle-type driving device 100 with the minimum conversion ratio ever occurring within this range. In step S2120, when the steering angle is greater than or equal to 0° and less than or equal to 25°, the traveling speed of the vehicle-type driving device 100 gradually changes with the conversion ratio over time.

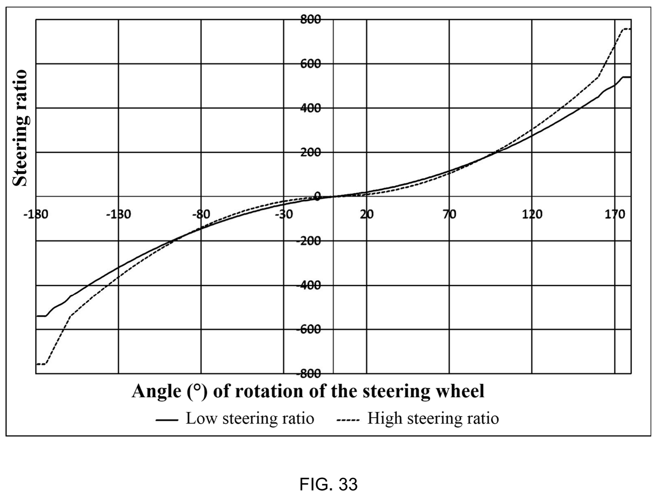

The case where the vehicle-type driving device 100 decelerates during turning may be adjusted in the manner described below. As shown in FIG. 33, the steering wheel 561 is configured to control the vehicle-type driving device 100 to steer, and a driving device drives the vehicle-type driving device 100 to steer at a target angular velocity. The ratio of the target angular velocity to the change in the steering angle of the steering wheel 561 is defined as a steering ratio. The control device is configured to, when the traveling speed of the vehicle-type driving device 100 is within a preset range, set the steering ratio according to a steering ratio curve function, where the variables of the steering ratio curve function include the steering angle of the steering wheel 561 and the traveling speed of the vehicle-type driving device 100.

The change in the angle of the steering wheel 561 is the difference between the angle of the steering wheel 561 after the change and the initial angle of the steering wheel 561. The initial angle of the steering wheel 561 is the angle of the steering wheel 561 when the vehicle-type driving device 100 moves straight, that is, 0°.

The steering ratio is the ratio of the target angular velocity to the change in the steering angle of the steering wheel 561. The steering ratio is set according to the steering ratio curve function when the traveling speed is within the preset range, and then the traveling speed of the vehicle-type driving device 100 is determined according to the steering ratio and the steering angle of the steering wheel 561. The vehicle-type driving device 100 travels according to the traveling speed. In this manner, the traveling speed of the vehicle-type driving device 100 is adjusted according to the steering angle of the steering wheel 561 so that the steering feel of the vehicle-type driving device 100 at different speeds can be improved, the problem of poor operating feel for a driver driving and turning can be solved, and the operating experience of the user can be improved.

The steering ratio curve function includes a low-speed steering ratio curve function and a high-speed steering ratio curve function, and the preset range includes a low-speed driving threshold and a high-speed driving threshold, where when the traveling speed is less than the low-speed driving threshold, a low-speed steering ratio is set according to the low-speed steering ratio curve function; and when the traveling speed is greater than the high-speed driving threshold, a high-speed steering ratio of the traveling wheel is set according to the high-speed steering ratio curve function. At different speeds, the traveling speed of the vehicle-type driving device 100 is adjusted according to different steering ratio curves, thereby improving the operating comfort of the driver driving the vehicle-type driving device 100 to steer.

The maximum traveling speed of the vehicle-type driving device 100 is greater than or equal to 11 km/h and less than or equal to 14 km/h, the low-speed driving threshold is 20% of the maximum traveling speed, and the high-speed driving threshold is 90% of the maximum traveling speed. In some examples, the low-speed driving threshold is 60% of the maximum traveling speed, and the high-speed driving threshold is 80% of the maximum traveling speed.

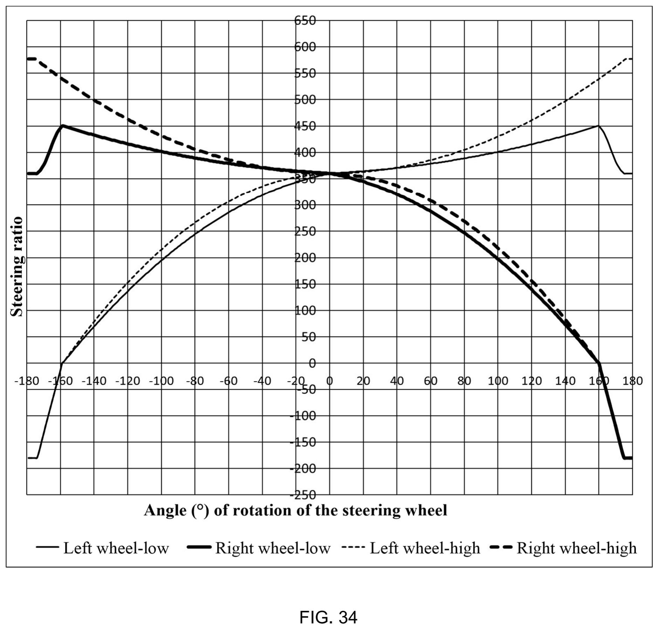

The traveling wheels include left traveling wheels and right traveling wheels. As shown in FIG. 34, the low-speed steering ratio curve function includes a left-wheel low-speed steering ratio curve function and a right-wheel low-speed steering ratio curve function. When the traveling speed of the left traveling wheel is less than the low-speed driving threshold, the low-speed steering ratio of the left traveling wheel is set according to the left-wheel low-speed steering ratio curve function. When the traveling speed of the right traveling wheel is less than the low-speed driving threshold, the low-speed steering ratio of the right traveling wheel is set according to the right-wheel low-speed steering ratio curve function. The left-wheel low-speed steering ratio curve function corresponds to the left wheel-low curve in FIG. 34, and the right-wheel low-speed steering ratio curve function corresponds to the right wheel-low curve in FIG. 34.

The high-speed steering ratio curve function includes a left-wheel high-speed steering ratio curve function and a right-wheel high-speed steering ratio curve function. When the traveling speed of the left traveling wheel is greater than the high-speed driving threshold, the high-speed steering ratio of the left traveling wheel is set according to the left-wheel high-speed steering ratio curve function. When the traveling speed of the right traveling wheel is greater than the high-speed driving threshold, the high-speed steering ratio of the right traveling wheel is set according to the right-wheel high-speed steering ratio curve function. The left-wheel high-speed steering ratio curve function corresponds to the left wheel-high curve in FIG. 34, and the right-wheel high-speed steering ratio curve function corresponds to the right wheel-high curve in FIG. 34.

To sum up, different steering ratios are set for the traveling wheels at different positions at different traveling speeds. The traveling speed of the traveling wheel is adjusted in a targeted manner according to the set steering ratio so that the steering feel of the vehicle-type driving device 100 at different speeds can be greatly improved.

If the traveling speed of the vehicle-type driving device 100 is between the low-speed driving threshold and the high-speed driving threshold, the low-speed steering ratio in the low-speed steering ratio curve function and the high-speed steering ratio in the high-speed steering ratio curve function are determined according to the steering angle of the steering wheel 561, and the steering ratio curve function at the traveling speed is determined according to the low-speed steering ratio and the high-speed steering ratio. It is to be noted that when the traveling speed of the vehicle-type driving device 100 is between the low-speed driving threshold and the high-speed driving threshold, the steering ratio at the traveling speed is calculated, the target angular velocity is determined according to the steering ratio and the change in the steering angle of the steering wheel 561, and then the traveling speed of the vehicle-type driving device 100 is updated and adjusted according to the target angular velocity.

When the traveling speed of the vehicle-type driving device 100 is between the low-speed driving threshold and the high-speed driving threshold, the steering ratio curve function is Ratio_Speed = Ratio_SpeedLow × (1 - ratio) + Ratio_SpeedHigh × ratio. Ratio_SpeedLow denotes the low-speed steering ratio, Ratio_SpeedHigh denotes the high-speed steering ratio, ratio denotes a steering ratio coefficient of the steering wheel 561, and the ratio is greater than or equal to 0 and less than or equal to 1. At the current steering angle of the steering wheel 561, the steering ratio at the current speed is calculated according to the corresponding low-speed steering ratio in the low-speed steering ratio curve function at this angle and the corresponding high-speed steering ratio in the high-speed steering ratio curve function at this angle, and the target angular velocity is obtained according to the calculated steering ratio curve. The low-speed steering ratio curve function corresponds to the low steering ratio curve in FIG. 33, and the high-speed steering ratio curve function corresponds to the high steering ratio curve in FIG. 33. ratio = (A_Speed - TH_L)/(TH_H - TH_L), where A_Speed denotes the traveling speed of the vehicle-type driving device 100, TH_L denotes the low-speed driving threshold, and TH_H denotes the high-speed driving threshold.

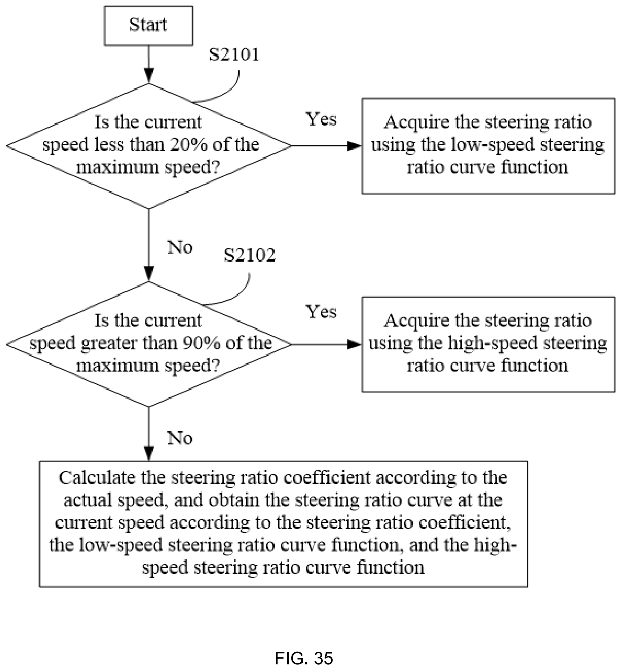

As shown in FIG. 35, in step S2101, the detection device 102 determines whether the current traveling speed of the vehicle-type driving device 100 is less than 20% of the maximum traveling speed. If the determination result is yes, the steering ratio is acquired using the low-speed steering ratio curve function. If the determination result is no, in step S2102, the detection device 102 determines whether the current traveling speed of the vehicle-type driving device 100 is greater than 90% of the maximum traveling speed. If the determination result is yes, the steering ratio is acquired using the high-speed steering ratio curve function. If the determination result is no, the steering ratio coefficient is calculated according to the actual traveling speed of the vehicle-type driving device 100, and the steering ratio curve of the vehicle-type driving device 100 at the current traveling speed is obtained according to the calculated steering ratio coefficient, the low-speed steering ratio curve function, and the high-speed steering ratio curve function. When the vehicle-type driving device 100 travels at a high speed, the steering ratio is small; and when the vehicle-type driving device 100 travels at a low speed, the steering ratio is large. In this manner, the user feels comfortable when operating the vehicle-type driving device 100 to steer, without any sense of resistance or pulling.

When the vehicle-type driving device 100 is in operation, the energy stored in the first energy storage device 101 is consumed. The vehicle-type driving device 100 reduces some performances of the vehicle-type driving device 100 when the residual energy stored in the first energy storage device 101 is relatively low. In some examples, the first energy storage device 101 is the power supply assembly 96. The first energy storage device 101 supplies power to the traveling motor 104 and the cutting motor 13. The detection device 102 detects the voltage or the remaining power of the first energy storage device 101. In some examples, the detection device 102 detects the amount of substance, current, or internal pressure of the first energy storage device 101. The values detected by the detection device 102 are not limited, as long as the power state of the first energy storage device 101 can be detected. The first energy storage device 101 has a normal state and a low power state. When the voltage or the remaining power of the first energy storage device 101 is higher than a first preset level, the first energy storage device 101 is in the normal state. When the voltage or the remaining power of the first energy storage device 101 is lower than or equal to the first preset level, the first energy storage device 101 is in the low power state. The control device 103 controls the output states of the traveling motor 104 and the cutting motor 13. The output states of the traveling motor 104 and the cutting motor 13 include the torque, the maximum rotational acceleration, and the maximum rotational speed of the traveling motor 104 and the cutting motor 13.

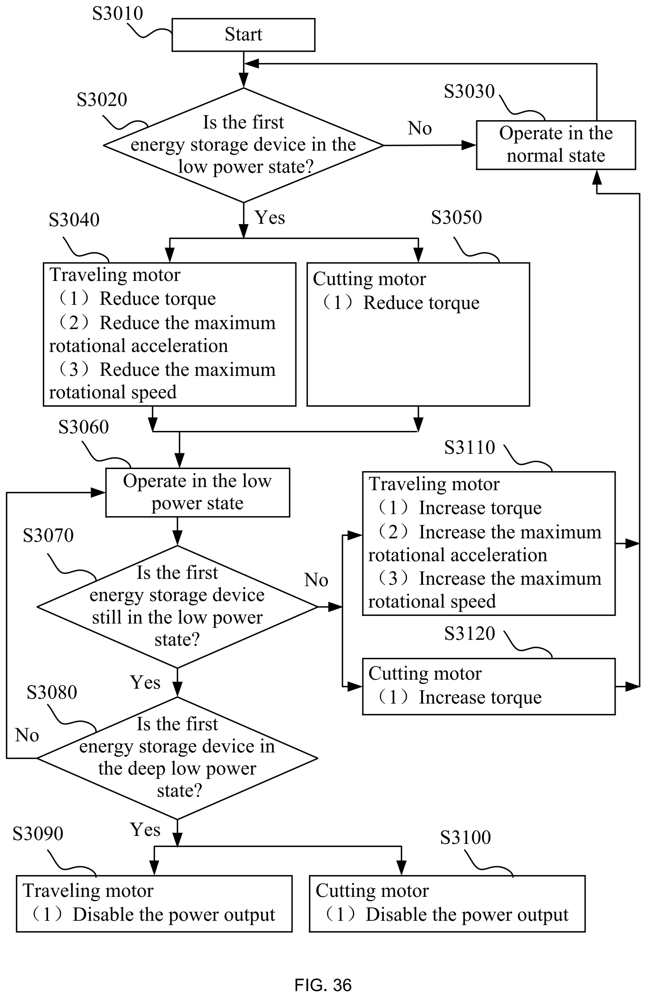

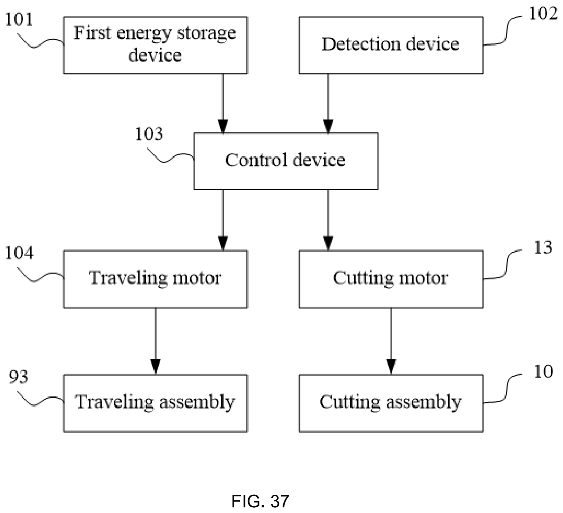

As shown in FIGS. 36 and 37, the user starts the vehicle-type driving device 100 in step S3010. The detection device 102 detects the voltage or the remaining power of the first energy storage device 101. In step S3020, the battery management system determines whether the first energy storage device 101 is in the low power state. If the detection device 102 detects that the voltage or the remaining power of the first energy storage device 101 is higher than the first preset level, the battery management system determines that the first energy storage device 101 is not in the low power state. In step S3030, the vehicle-type driving device 100 operates in the normal state. During operation in the normal state, the traveling motor 104 and the cutting motor 13 directly perform outputting according to output instructions preset by the user or the manufacturer at the time of delivery. When the user adjusts the torque, the maximum rotational acceleration, or the maximum rotational speed of the traveling motor 104 or the cutting motor 13, the torque, the maximum rotational acceleration, or the maximum rotational speed of the traveling motor 104 or the cutting motor 13 is adjusted according to the operation of the user.

The traveling motor 104 and the cutting motor 13 have default torques at the time of delivery. In some examples, after the user starts the vehicle-type driving device 100, the torque of the traveling motor 104 is configured to be greater than or equal to 6 N/m and less than or equal to 12 N/m, and the torque of the cutting motor 13 is configured to be greater than or equal to 1 N/m and less than or equal to 5 N/m. In some examples, the torque of the traveling motor 104 is configured to be greater than or equal to 9 N/m and less than or equal to 11 N/m, and the torque of the cutting motor 13 is configured to be greater than or equal to 3 N/m and less than or equal to 5 N/m. In some examples, the torque of the traveling motor 104 is set to 10 N/m, and the torque of the cutting motor 13 is set to 4 N/m. It is to be understood that, in other examples, the torque of the traveling motor 104 and the cutting motor 13 may be adjustable by the user.

In some examples, the vehicle-type driving device 100 includes multiple operation modes, such as a sport mode, a stand mode, and a control mode. Different operation modes correspond to different maximum rotational accelerations of the traveling motor 104. The user adjusts the operation mode to adjust the traveling acceleration of the vehicle-type driving device 100. It is to be understood that, in other examples, the user may directly adjust the value of the maximum traveling acceleration of the vehicle-type driving device 100. When the user operates the vehicle-type driving device 100 to work in the sport mode, the maximum rotational acceleration of the traveling motor 104 is configured to be less than or equal to 7 m/s2. When the user operates the vehicle-type driving device 100 to work in the stand mode, the maximum rotational acceleration of the traveling motor 104 is configured to be less than or equal to 5 m/s2. When the user operates the vehicle-type driving device 100 to work in the control mode, the maximum rotational acceleration of the traveling motor 104 is configured to be less than or equal to 4 m/s2. In some examples, when the user operates the vehicle-type driving device 100 to work in the control mode, the maximum rotational acceleration of the traveling motor 104 is configured to be less than or equal to 2 m/s2.

In some examples, the vehicle-type driving device 100 includes multiple speed gears, such as a first gear, a second gear, and a third gear. Different speed gears correspond to different maximum rotational speeds of the traveling motor 104. The user adjusts the speed gear to adjust the traveling speed of the vehicle-type driving device 100. It is to be understood that, in other examples, the user may directly adjust the value of the maximum traveling speed of the vehicle-type driving device 100. When the user operates the vehicle-type driving device 100 to work in the first gear, the maximum rotational speed of the traveling motor 104 is configured to be less than or equal to 2 m/s. When the user operates the vehicle-type driving device 100 to work in the second gear, the maximum rotational speed of the traveling motor 104 is configured to be less than or equal to 3 m/s. When the user operates the vehicle-type driving device 100 to work in the third gear, the maximum rotational speed of the traveling motor 104 is configured to be less than or equal to 4 m/s.

If the detection device 102 detects that the voltage or the remaining power of the first energy storage device 101 is lower than or equal to the first preset level, the battery management system determines that the first energy storage device 101 is in the low power state. In step S3040, the control device 103 reduces the torque and the maximum rotational acceleration of the traveling motor 104 and reduces the maximum rotational speed of the traveling motor 104. In step S3050, the control device 103 reduces the torque of the cutting motor 13. Step S3040 and step S3050 may be performed simultaneously or sequentially. Both step S3040 and step S3050 are performed after step S3030 and before step S3060. The control device 103 does not reduce the maximum rotational acceleration and the maximum rotational speed of the cutting motor 13. The maximum rotational acceleration of the cutting motor 13 remains unchanged compared to the preset maximum rotational acceleration of the cutting motor 13, and the maximum rotational speed of the cutting motor 13 remains unchanged compared to the preset maximum rotational speed of the cutting motor 13. In step S3060, the vehicle-type driving device 100 operates in the low power state. During operation in the low power state, the user can still adjust the output instructions to the traveling motor 104 and the cutting motor 13, and the control device 103 automatically reduces the torque, the maximum rotational acceleration, and the maximum speed of the traveling motor 104 to the set values and reduces the torque of the cutting motor 13 to the set value.

In some examples, the torque of the traveling motor 104 is reduced to greater than or equal to 1 N/m and less than or equal to 7 N/m, and the torque of the cutting motor 13 is reduced to greater than or equal to 1 N/m and less than or equal to 3 N/m. In some examples, the torque of the traveling motor 104 is reduced to greater than or equal to 2 N/m and less than or equal to 5 N/m, and the torque of the cutting motor 13 is reduced to greater than or equal to 1.3 N/m and less than or equal to 2.7 N/m. In some examples, the torque of the traveling motor 104 is reduced to 4 N/m, and the torque of the cutting motor 13 is reduced to 2 N/m.

In some examples, the operation mode of the vehicle-type driving device 100 is limited to the control mode, and the maximum rotational acceleration of the traveling motor 104 is reduced to less than or equal to 4 m/s2. Even if the user adjusts the operation mode of the vehicle-type driving device 100 to the sport mode or the stand mode, the vehicle-type driving device 100 still operates in the control mode, and the maximum rotational acceleration of the traveling motor 104 is less than or equal to 4 m/s2. In some examples, the maximum rotational acceleration of the traveling motor 104 is reduced to less than or equal to 2 m/s2. It is to be understood that, in other examples, in the low power state, even if the user directly adjusts the maximum rotational acceleration of the vehicle-type driving device 100, the control device 103 limits the maximum rotational acceleration of the traveling motor 104 to a value less than the maximum rotational acceleration set by the user.

In some examples, the speed gear of the vehicle-type driving device 100 is limited to the second gear, and the maximum rotational speed of the traveling motor 104 is reduced to less than or equal to 3 m/s. Even if the user adjusts the speed gear of the vehicle-type driving device 100, the vehicle-type driving device 100 travels at the traveling speed in the second gear, and the maximum rotational speed of the traveling motor 104 is less than or equal to 3 m/s. In some examples, the maximum rotational speed of the traveling motor 104 is reduced to less than or equal to 2 m/s. It is to be understood that, in other examples, in the low power state, even if the user directly adjusts the maximum rotational speed of the vehicle-type driving device 100, the control device 103 limits the maximum rotational speed of the traveling motor 104 to a value less than the maximum rotational speed set by the user.

In the low power state, the control device 103 reduces the torque, the maximum rotational acceleration, and the maximum rotational speed of the traveling motor 104 and reduces the torque of the cutting motor 13. In this manner, the battery life of the first energy storage device 101 is extended, the vehicle-type driving device 100 can move in a wider range without recharging, and the preceding manner plays a certain role in reminding the user of recharging. In the low power state, the torque and the maximum rotational acceleration of the traveling motor 104 are reduced. In this manner, when the user quickly steps on the pedal assembly 61, since the maximum acceleration of the traveling motor 104 is limited, the amount of power supplied to the vehicle-type driving device 100 by operating the accelerator assembly 62 is limited, and the voltage of the first energy storage device 101 is not reduced rapidly. Therefore, the sudden shutdown of the vehicle-type driving device 100 due to a low-voltage fault can be avoided, the risk of damage to the battery management system can be reduced, the user experience can be improved, and the service life of the first energy storage device 101 can be extended.

The user can charge the vehicle-type driving device 100 in the low power state. In step S3070, the battery management system determines whether the first energy storage device 101 is still in the low power state. If the detection device 102 detects that the voltage or the remaining power of the first energy storage device 101 is higher than the first preset level, the battery management system determines that the first energy storage device 101 exits the low power state. In step S3110, the control device 103 increases the torque and the maximum rotational acceleration of the traveling motor 104 and increases the maximum rotational speed of the traveling motor 104. In step S3120, the control device 103 increases the torque of the cutting motor 13. Step S3110 and step S3120 may be performed simultaneously or sequentially. The vehicle-type driving device 100 operates in the normal state. After the vehicle-type driving device 100 enters the normal state from the low power state, the torque, the maximum rotational acceleration, and the maximum rotational speed of the traveling motor 104 are restored to normal values, and the torque of the cutting motor 13 is restored to a normal value so that the user operation is convenient and smooth. If the detection device 102 detects that the voltage or the remaining power of the first energy storage device 101 is still lower than or equal to the first preset level, the battery management system determines that the first energy storage device 101 is still in the low power state, and step 3080 is performed.

In step S3080, the battery management system determines whether the first energy storage device 101 is in the deep low power state. If the detection device 102 detects that the voltage or the remaining power of the first energy storage device 101 is higher than a second preset level lower than the first preset level, the battery management system determines that the first energy storage device 101 is still in the low power state, and the vehicle-type driving device 100 still operates in the low power state.

If the detection device 102 detects that the voltage or the remaining power of the first energy storage device 101 is lower than or equal to the second preset level lower than the first preset level, the battery management system determines that the first energy storage device 101 is in the deep low power state. In the deep low power state, in step S3090, the control device 103 disables the power output of the traveling motor 104. In step S3100, the control device 103 disables the power output of the cutting motor 13. Step S3090 and step S3100 may be performed simultaneously or sequentially. In some examples, the control device 103 controls the traveling motor 104 and the cutting motor 13 to stop. In some examples, the traveling motor 104 and the cutting motor 13 still rotate, but the power outputs of the traveling motor 104 and the cutting motor 13 are ineffective or the effects are not obvious. For example, the traveling motor 104 drives the traveling assembly 93 to move very slowly, and the cutting motor 13 drives the mowing assembly 10 to brush over the grass but not to mow the grass.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

At last, further examples of the present invention are given below:
1. A vehicle-type driving device, comprising:
   a traveling assembly (93) comprising a plurality of traveling wheels;
   a steering wheel (561) configured to control the vehicle-type driving device (100) to steer;
   a traveling motor (104) for driving the vehicle-type driving device (100) to steer at a target angular velocity, wherein a ratio of the target angular velocity to a change in a steering angle of the steering wheel (561) is defined as a steering ratio; and
   a control device (103) configured to:
      when a traveling speed of the vehicle-type driving device (100) is within a preset range, set the steering ratio according to a steering ratio curve function;
      wherein variables of the steering ratio curve function comprise the steering angle of the steering wheel (561) and the traveling speed of the vehicle-type driving device (100).
2. The vehicle-type driving device of example 1, wherein the steering ratio curve function comprises a low-speed steering ratio curve function and a high-speed steering ratio curve function, and the preset range comprises a low-speed driving threshold and a high-speed driving threshold, wherein when the traveling speed is less than the low-speed driving threshold, a low-speed steering ratio is set according to the low-speed steering ratio curve function; and when the traveling speed is greater than the high-speed driving threshold, a high-speed steering ratio of a traveling wheel of the plurality of traveling wheels is set according to the high-speed steering ratio curve function.
3. The vehicle-type driving device of example 2, wherein the plurality of traveling wheels comprise a left traveling wheel and a right traveling wheel, and the low-speed steering ratio curve function comprises a left-wheel low-speed steering ratio curve function and a right-wheel low-speed steering ratio curve function, wherein when a traveling speed of the left traveling wheel is less than the low-speed driving threshold, a low-speed steering ratio of the left traveling wheel is set according to the left-wheel low-speed steering ratio curve function; and when a traveling speed of the right traveling wheel is less than the low-speed driving threshold, a low-speed steering ratio of the right traveling wheel is set according to the right-wheel low-speed steering ratio curve function.
4. The vehicle-type driving device of example 2, wherein the plurality of traveling wheels comprise a left traveling wheel and a right traveling wheel, and the high-speed steering ratio curve function comprises a left-wheel high-speed steering ratio curve function and a right-wheel high-speed steering ratio curve function, wherein when a traveling speed of the left traveling wheel is greater than the high-speed driving threshold, a high-speed steering ratio of the left traveling wheel is set according to the left-wheel high-speed steering ratio curve function; and when a traveling speed of the right traveling wheel is greater than the high-speed driving threshold, a high-speed steering ratio of the right traveling wheel is set according to the right-wheel high-speed steering ratio curve function.
5. The vehicle-type driving device of example 2, wherein a maximum traveling speed of the vehicle-type driving device (100) is greater than or equal to 11 km/h and less than or equal to 14 km/h, and the low-speed driving threshold is 20% of the maximum traveling speed.
6. The vehicle-type driving device of example 2, wherein a maximum traveling speed of the vehicle-type driving device (100) is greater than or equal to 11 km/h and less than or equal to 14 km/h, and the high-speed driving threshold is 90% of the maximum traveling speed.
7. The vehicle-type driving device of example 2, wherein when the traveling speed of the vehicle-type driving device (100) is between the low-speed driving threshold and the high-speed driving threshold, the low-speed steering ratio in the low-speed steering ratio curve function and the high-speed steering ratio in the high-speed steering ratio curve function are determined according to the steering angle of the steering wheel (561), and the steering ratio curve function at the traveling speed is determined according to the low-speed steering ratio and the high-speed steering ratio.
8. The vehicle-type driving device of example 7, wherein when the traveling speed of the vehicle-type driving device (100) is between the low-speed driving threshold and the high-speed driving threshold, the steering ratio curve function is Ratio_Speed = Ratio_SpeedLow × (1 - ratio) + Ratio_SpeedHigh × ratio, wherein Ratio_SpeedLow denotes the low-speed steering ratio, Ratio_SpeedHigh denotes the high-speed steering ratio, ratio denotes a steering ratio coefficient of the steering wheel, and a value of the steering ratio coefficient of the steering wheel is greater than or equal to 0 and less than or equal to 1.
9. The vehicle-type driving device of example 8, wherein ratio = (A_Speed - TH_L)/(TH_H - TH_L), wherein A_Speed denotes the traveling speed of the vehicle-type driving device (100), TH_L denotes the low-speed driving threshold, and TH_H denotes the high-speed driving threshold.
10. The vehicle-type driving device of example 7, wherein the steering ratio is set according to the steering ratio curve function corresponding to when the traveling speed is between the low-speed driving threshold and the high-speed driving threshold, the target angular velocity is determined according to the steering ratio and the change in the steering angle of the steering wheel (561), and the traveling speed is determined according to the target angular velocity.
11. The vehicle-type driving device of example 1, further comprising a speed setting device for setting the traveling speed of the vehicle-type driving device (100), wherein the traveling speed set by the speed setting device is defined as an input speed, the traveling motor drives the vehicle-type driving device (100) to travel at a target speed, a ratio of the target speed to the input speed is defined as a conversion ratio, and the control device (103) is configured to be capable of setting the conversion ratio according to the steering angle of the steering wheel (561).
12. The vehicle-type driving device of example 11, wherein during a steering process of the vehicle-type driving device (100), in a case where the steering angle of the steering wheel (561) is within a preset range, when the steering wheel (561) has a first steering angle, the control device (103) sets the conversion ratio to a first steering conversion ratio; and when the steering wheel (561) has a second steering angle, the control device (104) sets the conversion ratio to a second steering conversion ratio, wherein the second steering conversion ratio is different from the first steering conversion ratio.
13. The vehicle-type driving device of example 1, further comprising a cutting motor, a first energy storage device, a detection device, and the control device, wherein the cutting motor is configured to drive a cutting assembly to work, the first energy storage device is configured to supply power to the traveling motor and the cutting motor and has a low power state, the detection device is configured to detect whether the first energy storage device is in the low power state, and the control device is configured to control output states of the traveling motor and the cutting motor.
14. The vehicle-type driving device of example 13, wherein when the first energy storage device is in the low power state, the control device reduces torque of the traveling motor and reduces maximum rotational acceleration of the traveling motor.
15. The vehicle-type driving device of example 1, further comprising a cutting motor (13) configured to drive a cutting assembly to work, a detection device (102) for detecting a first operating parameter and a second operating parameter of the cutting motor (13), and the control device (103), wherein when the first operating parameter is within a first threshold range, the second operating parameter is within a second threshold range, and a duration that the first operating parameter is within the first threshold range and the second operating parameter is within the second threshold range is a first preset time, the control device (103) controls the cutting motor (13) to stop or slow down, the second operating parameter is different from the first operating parameter, and the second operating parameter comprises at least a rotational speed of the cutting motor (13).
16. A vehicle-type driving device, comprising:
   a traveling assembly (93) comprising a plurality of traveling wheels;
   a steering wheel (561) configured to control the vehicle-type driving device (100) to steer;
   a traveling motor (104) for driving the vehicle-type driving device (100) to steer at a target angular velocity, wherein a ratio of the target angular velocity to a change in a steering angle of the steering wheel (561) is defined as a steering ratio; and
   a control device (103) configured to:
      when a traveling speed of the vehicle-type driving device (100) is within a preset range, set the steering ratio according to a steering ratio curve function;
      wherein a variable of the steering ratio curve function comprises the traveling speed of the vehicle-type driving device (100).
17. A vehicle-type driving device, comprising:
   a traveling assembly (93) comprising a plurality of traveling wheels;
   a steering wheel (561) configured to control the vehicle-type driving device (100) to steer;
   a traveling motor (104) for driving the vehicle-type driving device (100) to steer at a target angular velocity, wherein a ratio of the target angular velocity to a change in a steering angle of the steering wheel (561) is defined as a steering ratio; and
   a control device (103) configured to:
      when a traveling speed of the vehicle-type driving device (100) is within a preset range, set the steering ratio according to a plurality of steering ratio curve functions;
      wherein a variable of at least one of the plurality of steering ratio curve functions comprises the traveling speed of the vehicle-type driving device (100).
18. The vehicle-type driving device of example 17, wherein the plurality of steering ratio curve functions comprise a low-speed steering ratio curve function and a high-speed steering ratio curve function, and the preset range comprises a low-speed driving threshold and a high-speed driving threshold, wherein when the traveling speed is less than the low-speed driving threshold, a low-speed steering ratio is set according to the low-speed steering ratio curve function; and when the traveling speed is greater than the high-speed driving threshold, a high-speed steering ratio of a traveling wheel of the plurality of traveling wheels is set according to the high-speed steering ratio curve function.
19. The vehicle-type driving device of example 18, wherein when the traveling speed of the vehicle-type driving device (100) is between the low-speed driving threshold and the high-speed driving threshold, the low-speed steering ratio in the low-speed steering ratio curve function and the high-speed steering ratio in the high-speed steering ratio curve function are determined according to the steering angle of the steering wheel (561), and a steering ratio curve function at the traveling speed is determined according to the low-speed steering ratio and the high-speed steering ratio.
20. The vehicle-type driving device of example 17, wherein when the traveling speed of the vehicle-type driving device (100) is within the preset range, the variable of a steering ratio curve function of the plurality of steering ratio curve functions comprises a steering ratio coefficient of the steering wheel depending on the traveling speed of the vehicle-type driving device (100), and a value of the steering ratio coefficient of the steering wheel is greater than or equal to 0 and less than or equal to 1.
21. A vehicle-type driving device, comprising:
   a body (100a) comprising a traveling assembly (93) and a traveling motor (104) for driving the traveling assembly (93);
   a steering wheel assembly (56); and
   a connection assembly (70) connecting the steering wheel assembly (56) to the body (100a);
   wherein the steering wheel assembly (56) comprises:
      a steering wheel (561) rotatable about a first axis (1f) relative to the connection assembly (70);
      a switch (564) electrically connected to the traveling motor (104) to control the traveling motor (104);
      an operating member (565) comprising a trigger portion (5651) capable of triggering the switch (564), wherein the operating member (565) is rotatably connected to the steering wheel (561) with a second axis (1g) as an axis; and
      a reset element (566) driving the operating member (565) to reset, wherein the operating member (565) comprises a reset portion (5652) in contact with the reset element (566);
      wherein the reset portion (5652) and the trigger portion (5651) are disposed on two sides of the second axis (1g).
22. The vehicle-type driving device of example 21, wherein the reset portion (5652) and the trigger portion (5651) are disposed on two sides of a plane passing through the second axis (1g) and parallel to the first axis (1f).
23. The vehicle-type driving device of example 21, wherein the steering wheel assembly (56) comprises a steering wheel housing (563), a main limiting portion (567) is disposed on the steering wheel housing (563), the main limiting portion (567) is disposed on a side of the second axis (1g) facing the trigger portion (5651), and the main limiting portion (567) is configured to limit displacement of the trigger portion (5651) when the trigger portion (5651) triggers the switch (564).
24. The vehicle-type driving device of example 23, wherein the main limiting portion (567) comprises a first limiting block (5671) and a second limiting block (5672), and the operating member (565) is provided with a first limiting portion (5653) matching and limiting the first limiting block (5671) and a second limiting portion (5654) matching and limiting the second limiting block (5672).
25. The vehicle-type driving device of example 21, wherein the steering wheel assembly (56) comprises a steering wheel housing (563), an auxiliary limiting portion (568) is disposed on the steering wheel housing (563), the auxiliary limiting portion (568) is disposed on a side of the second axis (1g) facing the reset portion (5652), and the auxiliary limiting portion (568) is configured to limit displacement of the trigger portion (5651) when the trigger portion (5651) triggers the switch (564).
26. The vehicle-type driving device of example 21, wherein at least two reset elements (566) are provided.
27. The vehicle-type driving device of example 21, wherein the trigger portion (5651) is a trapezoidal structure, the trigger portion (5651) is provided with a trigger surface for triggering the switch (564), and a reinforced structure (5655) is disposed on a side of the trigger portion (5651) opposite to the trigger surface.
28. The vehicle-type driving device of example 21, wherein the switch (564) is a micro rocker switch.
29. The vehicle-type driving device of example 21, wherein a spacer (569) is disposed between the switch (564) and the trigger portion (5651) of the operating member (565), and the spacer (569) is elastic deformable.
30. The vehicle-type driving device of example 21, wherein the steering wheel assembly (56) comprises a steering wheel housing (563), the operating member (565) comprises a toggle (5656) and a trigger (5657), the trigger (5657) is rotatably connected to the steering wheel housing (563) with the second axis (1g) as an axis, an end of the toggle (5656) is detachably connected to the trigger (5657), and another end of the toggle (5656) is disposed on an outer side of the steering wheel housing (563).
31. A vehicle-type driving device, comprising:
   a traveling assembly (93) comprising a plurality of traveling wheels;
   a traveling motor (104) configured to drive the traveling assembly (93);
   a first energy storage device (101) configured to supply power to at least the traveling motor (104) so that the traveling motor (104) drives the traveling assembly (93) to operate; and
   a second energy storage device (107) configured to, when power of the first energy storage device (101) is less than a preset value and/or when an electrical energy transmission path from the first energy storage device (101) to the traveling motor (104) fails or is cut off, serve as an electric power source to control the traveling motor (104) to enter a parking mode.
32. The vehicle-type driving device of example 31, further comprising a control device (103), wherein the control device (103) comprises a controller unit (105) and a drive control unit, and the controller unit (105) is capable of controlling the drive control unit so that the traveling motor (104) drives the traveling assembly (93) to operate.
33. The vehicle-type driving device of example 32, wherein when the power of the first energy storage device (101) is greater than or equal to the preset value, the first energy storage device (101) serves as an electric power source so that the drive control unit controls the traveling motor (104) to enter the parking mode.
34. The vehicle-type driving device of example 32, wherein the second energy storage device (107) serves as the electric power source so that the drive control unit controls the traveling motor (104) to enter the parking mode.
35. The vehicle-type driving device of example 34, wherein the second energy storage device (107) comprises a capacitive power supply (107a), wherein when the power of the first energy storage device (101) is greater than the preset value, the first energy storage device (101) is capable of charging the capacitive power supply (107a); and when the power of the first energy storage device (101) is less than the preset value, the capacitive power supply (107a) serves as an electric power source so that the drive control unit controls the traveling motor (104) to enter the parking mode.
36. The vehicle-type driving device of example 35, wherein the second energy storage device (107) further comprises a first energy storage assembly (107b), wherein when the traveling assembly (93) coasts, a back electromotive force generated by the traveling motor (104) charges the first energy storage assembly (107b), and the first energy storage assembly (107b) charges the capacitive power supply (107a) when power of the capacitive power supply (107a) is less than a preset power value.
37. The vehicle-type driving device of example 34, wherein the second energy storage device (107) comprises a second energy storage assembly (107c), wherein when the power of the first energy storage device (101) is less than the preset value, the second energy storage assembly (107c) serves as an electric power source so that the drive control unit controls the traveling motor (104) to enter the parking mode.
38. The vehicle-type driving device of example 33 or 34, wherein the drive control unit comprises a switching element, and the switching element is powered and triggered to control the traveling motor (104) to enter the parking mode.
39. The vehicle-type driving device of example 31, wherein three phases of the traveling motor (104) are short-circuited so that the traveling motor (104) enters the parking mode.
40. The vehicle-type driving device of example 31, wherein the parking mode is a mode in which the traveling motor (104) slows down or stops.
41. A vehicle-type driving device, comprising:
   a cutting assembly (10) comprising a mowing element (12) for mowing grass;
   a chassis (91) supporting the cutting assembly (10);
   a cutting motor (13) configured to drive the cutting assembly (10);
   a detection device (102) for detecting a first operating parameter and a second operating parameter of the cutting motor (13); and
   a control device (103) for controlling the cutting motor (13) to stop or slow down when the first operating parameter is within a first threshold range, the second operating parameter is within a second threshold range, and a duration that the first operating parameter is within the first threshold range and the second operating parameter is within the second threshold range is a first preset time;
   wherein the second operating parameter is different from the first operating parameter, and the second operating parameter comprises at least a rotational speed of the cutting motor (13).
42. The vehicle-type driving device of example 41, wherein the control device (103) controls the cutting motor (13) to stop in a second preset time.
43. The vehicle-type driving device of example 42, wherein the second preset time is greater than 1s.
44. The vehicle-type driving device of example 41, wherein the first operating parameter comprises a bus current or a phase current.
45. The vehicle-type driving device of example 44, wherein the first operating parameter comprises the bus current, and the first threshold range is greater than 0 A and less than or equal to 3 A.
46. The vehicle-type driving device of example 44, wherein the first operating parameter comprises the phase current, and the first threshold range is greater than 0 A and less than or equal to 4 A.
47. The vehicle-type driving device of example 41, wherein the second operating parameter comprises an actual rotational speed and a target rotational speed of an electric motor, and the second threshold range comprises an actual rotational speed range and a target rotational speed range of the electric motor, wherein when the actual rotational speed of the cutting motor (13) is within the actual rotational speed range of the electric motor for the first preset time and the target rotational speed of the cutting motor (13) is within the target rotational speed range of the electric motor for the first preset time, the control device (103) controls the cutting motor (13) to stop or slow down.
48. The vehicle-type driving device of example 47, wherein the actual rotational speed range of the electric motor is greater than or equal to 500 r/min, and the target rotational speed range of the electric motor is greater than or equal to 1950 r/min.
49. The vehicle-type driving device of example 41, further comprising a traveling assembly (93), a traveling motor (104) for driving the traveling assembly (93) to operate, a display screen, a switch panel, and a battery management system, wherein before the control device (103) controls the cutting motor (13) to start, whether the traveling motor (104), the display screen, the switch panel, and the battery management system communicate normally with the control device (103) separately is determined; and if so, the cutting motor (13) starts.
50. The vehicle-type driving device of example 49, wherein when a rotational speed of the traveling motor (104) is greater than a preset rotational speed value, the cutting motor (13) stops.
51. A vehicle-type driving device, comprising:
   a traveling assembly (93) comprising a plurality of traveling wheels;
   a steering wheel (561) configured to control the vehicle-type driving device (100) to steer;
   a speed setting device for setting a traveling speed of the vehicle-type driving device (100), wherein the traveling speed set by the speed setting device is defined as an input speed;
   a traveling motor (104) for driving the vehicle-type driving device (100) to travel at a target speed, wherein a ratio of the target speed to the input speed is defined as a conversion ratio; and
   a control device (103) configured to set the conversion ratio according to a steering angle of the steering wheel (561);
   wherein during a steering process of the vehicle-type driving device (100), in a case where the steering angle of the steering wheel (561) is within a preset range, when the steering wheel (561) has a first steering angle, the control device (103) sets the conversion ratio to a first steering conversion ratio; and when the steering wheel (561) has a second steering angle, the control device (104) sets the conversion ratio to a second steering conversion ratio, wherein the second steering conversion ratio is different from the first steering conversion ratio.
52. The vehicle-type driving device of example 51, wherein the steering process of the vehicle-type driving device (100) comprises a first steering stage and a second steering stage, wherein the steering angle in the first steering stage is the first steering angle, the steering angle in the second steering stage is the second steering angle, the first steering conversion ratio remains unchanged when the vehicle-type driving device (100) is in the first steering stage, and the second steering conversion ratio changes linearly when the vehicle-type driving device (100) is in the second steering stage.
53. The vehicle-type driving device of example 52, wherein when the first steering angle is greater than or equal to 0° and less than or equal to 25°, the first steering conversion ratio is 100%.
54. The vehicle-type driving device of example 52, wherein a linear equation of the second steering conversion ratio in the second steering stage is y = -0.4516x + 111.3, wherein x denotes the second steering angle, y denotes the second steering conversion ratio, and the second steering angle is greater than 25° and less than or equal to 180°.
55. The vehicle-type driving device of example 51, wherein the steering wheel (561) is capable of controlling the vehicle-type driving device (100) to straighten out, and a direction in which the vehicle-type driving device (100) straightens out is opposite to a direction in which the vehicle-type driving device (100) steers.
56. The vehicle-type driving device of example 55, wherein before the vehicle-type driving device (100) straightens out, a minimum speed of the vehicle-type driving device (100) during the steering process is acquired, wherein the minimum speed is an initial target speed of the vehicle-type driving device (100) during a straightening-out process.
57. The vehicle-type driving device of example 56, wherein during the straightening-out process of the vehicle-type driving device (100), when the steering wheel (561) has a first straightening-out angle, the control device (103) sets the conversion ratio to a first straightening-out conversion ratio; and when the steering wheel (561) has a second straightening-out angle, the control device (103) sets the conversion ratio to a second straightening-out conversion ratio, wherein the second straightening-out conversion ratio is different from the first straightening-out conversion ratio.
58. The vehicle-type driving device of example 57, wherein the straightening-out process of the vehicle-type driving device (100) comprises a first straightening-out stage and a second straightening-out stage, wherein a straightening-out angle in the first straightening-out stage is the first straightening-out angle, a straightening-out angle in the second straightening-out stage is the second straightening-out angle, the first straightening-out conversion ratio remains unchanged when the vehicle-type driving device (100) is in the first straightening-out stage, and the second straightening-out conversion ratio changes linearly when the vehicle-type driving device (100) is in the second straightening-out stage.
59. The vehicle-type driving device of example 58, wherein when the first straightening-out angle is greater than or equal to 25° and less than or equal to 180°, the first straightening-out conversion ratio is 30%.
60. The vehicle-type driving device of example 59, wherein when the second straightening-out angle is greater than or equal to 0° and less than 25°, the second straightening-out conversion ratio changes from 30% to 100% within a preset time.
61. A vehicle-type driving device, comprising:
   a traveling assembly (93) comprising traveling wheels;
   a traveling motor (104) configured to drive the traveling assembly (93);
   a cutting motor (13) configured to drive a cutting assembly (10) to operate;
   a first energy storage device (101) configured to supply power to the traveling motor and the cutting motor, wherein the first energy storage device has a low power state;
   a detection device (102) configured to detect whether the first energy storage device is in the low power state; and
   a control device (103) configured to control output states of the traveling motor and the cutting motor;
   wherein when the first energy storage device is in the low power state, the control device reduces torque of the traveling motor and reduces maximum rotational acceleration of the traveling motor.
62. The vehicle-type driving device of example 61, wherein the detection device detects whether the first energy storage device is in the low power state by detecting a voltage or remaining power of the first energy storage device, wherein when the voltage or the remaining power of the first energy storage device is lower than or equal to a first preset level, the first energy storage device is in the low power state.
63. The vehicle-type driving device of example 61, wherein when the first energy storage device is in the low power state, the control device reduces a maximum rotational speed of the traveling motor.
64. The vehicle-type driving device of example 61, wherein when the first energy storage device is in the low power state, the control device reduces torque of the cutting motor.
65. The vehicle-type driving device of example 63, wherein when the first energy storage device is in the low power state, a maximum rotational speed of the cutting motor remains unchanged compared to a preset maximum rotational speed of the cutting motor, and maximum rotational acceleration of the cutting motor remains unchanged compared to preset maximum rotational acceleration of the cutting motor.
66. The vehicle-type driving device of example 62, wherein when the voltage or the remaining power of the first energy storage device is lower than or equal to a second preset level lower than the first preset level, the first energy storage device is in a deep low power state, and the control device disables power output of the traveling motor and the cutting motor.
67. The vehicle-type driving device of example 62, wherein in the low power state, when the voltage or the remaining power of the first energy storage device increases to be higher than the first preset level, the first energy storage device exits the low power state.
68. The vehicle-type driving device of example 67, wherein after the first energy storage device exits the low power state, the control device increases the torque of the traveling motor and increases the maximum rotational acceleration of the traveling motor.
69. The vehicle-type driving device of example 68, wherein when the first energy storage device is in the low power state, the control device reduces a maximum rotational speed of the traveling motor and torque of the cutting motor; and after the first energy storage device exits the low power state, the control device increases the maximum rotational speed of the traveling motor and the torque of the cutting motor.
70. The vehicle-type driving device of example 61, wherein the vehicle-type driving device is a riding mower.

## Claims

1. A vehicle-type driving device, comprising:
a traveling assembly comprising multiple traveling wheels;
a steering wheel configured to control the vehicle-type driving device to steer;
a speed setting device for setting a traveling speed of the vehicle-type driving device, where the traveling speed set by the speed setting device is defined as an input speed;
a traveling motor for driving the vehicle-type driving device to travel at a target speed, where a ratio of the target speed to the input speed is defined as a conversion ratio; and
a control device configured to set the conversion ratio according to a steering angle of the steering wheel.
wherein, during a steering process of the vehicle-type driving device, in the case where the steering angle of the steering wheel is within a first preset range, when the steering wheel has a first steering angle, the control device sets the conversion ratio to a first steering conversion ratio; and when the steering wheel has a second steering angle, the control device sets the conversion ratio to a second steering conversion ratio, where the second steering conversion ratio is different from the first steering conversion ratio.

2. The vehicle-type driving device of claim 1, wherein the steering process of the vehicle-type driving device comprises a first steering stage and a second steering stage, the steering angle in the first steering stage is the first steering angle, the steering angle in the second steering stage is the second steering angle, the first steering conversion ratio remains unchanged when the vehicle-type driving device is in the first steering stage, and the second steering conversion ratio changes linearly when the vehicle-type driving device is in the second steering stage.

3. The vehicle-type driving device of claim 2, wherein when the first steering angle is greater than or equal to 0° and less than or equal to 25°, the first steering conversion ratio is 100%.

4. The vehicle-type driving device of claim 2, wherein a linear equation of the second steering conversion ratio in the second steering stage is y = -0.4516x + 111.3, where x denotes the second steering angle, y denotes the second steering conversion ratio, and the second steering angle is greater than 25° and less than or equal to 180°.

5. The vehicle-type driving device of claim 1, wherein the steering wheel is capable of controlling the vehicle-type driving device to straighten out, and a direction in which the vehicle-type driving device straightens out is opposite to a direction in which the vehicle-type driving device steers.

6. The vehicle-type driving device of claim 5, wherein, before the vehicle-type driving device straightens out, a minimum speed of the vehicle-type driving device during the steering process is acquired, and the minimum speed is an initial target speed of the vehicle-type driving device during a straightening-out process.

7. The vehicle-type driving device of claim 6, wherein, during the straightening-out process of the vehicle-type driving device, when the steering wheel has a first straightening-out angle, the control device sets a conversion ratio to a first straightening-out conversion ratio; and when the steering wheel has a second straightening-out angle, the control device sets the conversion ratio to a second straightening-out conversion ratio, where the second straightening-out conversion ratio is different from the first straightening-out conversion ratio.

8. The vehicle-type driving device of claim 7, wherein the straightening-out process of the vehicle-type driving device comprises a first straightening-out stage and a second straightening-out stage, a straightening-out angle in the first straightening-out stage is the first straightening-out angle, a straightening-out angle in the second straightening-out stage is the second straightening-out angle, the first straightening-out conversion ratio remains unchanged when the vehicle-type driving device is in the first straightening-out stage, and the second straightening-out conversion ratio changes linearly when the vehicle-type driving device is in the second straightening-out stage.

9. The vehicle-type driving device of claim 8, wherein when the first straightening-out angle is greater than or equal to 25° and less than or equal to 180°, the first straightening-out conversion ratio is 30%.

10. The vehicle-type driving device of claim 9, wherein the second straightening-out angle is greater than or equal to 0° and less than 25°, the second straightening-out conversion ratio changes from 30% to 100% within a preset time.

11. The vehicle-type driving device of claim 1, wherein the vehicle-type driving device is a riding mower, and the riding mower comprises a cutting assembly comprising a cutting deck, mowing elements, and cutting motors for driving the mowing elements.

12. The vehicle-type driving device of claim 11, wherein the riding mower further comprises a power supply assembly used for supplying electric power to the cutting assembly and the traveling assembly, and the power supply assembly comprises at least one battery pack for storing an electrical energy.

13. The vehicle-type driving device of claim 12, wherein each of the at least one battery pack is a detachable external battery pack.

14. The vehicle-type driving device of claim 1, wherein the traveling motor is configured to drive the vehicle-type driving device to steer at a target angular velocity, a ratio of the target angular velocity to a change in the steering angle of the steering wheel is defined as a steering ratio, the control device is further configured to set the steering ratio according to a steering ratio curve function when the traveling speed of the vehicle-type driving device is within a second preset range, and variables of the steering ratio curve function comprise the steering angle of the steering wheel and the traveling speed of the vehicle-type driving device.

15. The vehicle-type driving device of claim 14, wherein the steering ratio curve function comprises a low-speed steering ratio curve function and a high-speed steering ratio curve function, the second preset range comprises a low-speed driving threshold and a high-speed driving threshold, a low-speed steering ratio is set according to the low-speed steering ratio curve function when the traveling speed is less than the low-speed driving threshold, and a high-speed steering ratio of a traveling wheel of the multiple traveling wheels is set according to the high-speed steering ratio curve function when the traveling speed is greater than the high-speed driving threshold.
